# EUROPÄISCHE PATENTSCHRIFT

(11) **EP 1 603 429 B1**
(45) Veröffentlichungstag und Bekanntmachung des Hinweises auf die Patenterteilung: **15.08.2007**
(21) Anmeldenummer: 04720000.1
(22) Anmeldetag: 12.03.2004
(51) Int. Cl.: A46D 3/04

(54) **VERFAHREN UND VORRICHTUNG ZUR HERSTELLUNG EINER BÜRSTE**
METHOD AND DEVICE FOR PRODUCING A BRUSH
PROCEDE ET DISPOSITIF POUR PRODUIRE UNE BROSSE

(30) Priorität: 12.03.2003 DE 20303934 U
(43) Veröffentlichungstag der Anmeldung: 14.12.2005
(73) Patentinhaber: M + C Schiffer GmbH, 53577 Neustadt-Wied (DE)
(72) Erfinder: CLOS, Thomas, 50968 Köln (DE)
(74) Vertreter: Grünecker, Kinkeldey, Stockmair & Schwanhäusser Anwaltssozietät
(86) Internationale Anmeldenummer: PCT/EP2004/002635
(87) Internationale Veröffentlichungsnummer: WO 2004/080238

(56) Entgegenhaltungen:
- WO-A-03/001942
- WO-A-03/001943
- DE-A- 19 902 129
- DE-U- 29 712 554
- US-A- 5 474 366
- US-A- 6 036 277

## Beschreibung

Die vorliegende Erfindung betrifft ein Verfahren und eine Vorrichtung zur Herstellung einer Bürste, insbesondere eine Zahnbürste, mit einem Borstenbündel aufweisenden Bürstenkopf.

Bürsten, insbesondere Zahnbürsten müssen bestimmten Anforderungen hinsichtlich der Flexibilität der Bürstenbündel erfüllen. So sollen die Borstenbündel zwar im Hinblick auf die erforderliche Putzwirkung möglichst flächig an der zu bürstenden Oberfläche, die nicht immer eben ist, anliegen und mit der erforderlichen Anpresskraft gegen die zu reinigende Fläche wirken. Andererseits muss aber eine übermäßige Anpresskraft verhindert werden. Bei Pflegebürsten für Gegenstände kann eine übermäßige Anpresskraft zu Kratzspuren führen und bei Bürsten für die Körperpflege und die Mundhygiene führt eine übermäßige Anpresskraft der nutzungsseitigen Enden der Borstenfilamente mitunter zu Verletzungen, insbesondere bei Zahnbürsten zu einer Schädigung der empfindlichen Mundschleimhäute.

So ist es für Zahnbürsten bekannt, zwischen dem Griffstiel und dem Bürstenkopf einer Zahnbürste einen flexiblen Halsbereich vorzusehen (z.B. US 5,054,154). Seit geraumer Zeit werden ferner einzelne oder zu Gruppen zusammengefasste Borstenbündel innerhalb des Bürstenkopfes flexibel gelagert. So ist es beispielsweise aus der WO 97/20484 bekannt, einzelne Borstenbündel an ihren befestigungsseitigen Enden mit einer ersten Hartkomponente aus Kunststoff zu umspritzen, durch Abscheren von für die spritzgusstechnische Herstellung erforderlichen Verbindungskanälen zwischen den so hergestellten Fassungen für die befestigungsseitigen Enden der Borstenbündel einzelne, die jeweiligen Borstenbündel umgebende Inseln zu bilden und diese durch Umspritzen mit einer Weichkomponente mit dem Griffstiel oder aber Teilen des Bürstenkopfes zu verbinden und elastisch zu lagern, welcher weitere für sich nicht flexibel gelagerte Borstenbündel aufweisen kann.

Bei einem anderen Stand der Technik EP 0 930 030 A2 werden Borstenbündel an einem Bürstenkopfsegment befestigt, welches für sich starr ist, welches jedoch gegenüber anderen Bürstenkopfsegmenten flexibel ist, die gegenüber dem Griffstiel gleichfalls flexibel gelagert sind. Hierzu wird üblicherweise zwischen den Bürstenkopfsegmenten ein Filmscharnier aus einem thermoplastische Elastomer ausgebildet (US 5,651,158), um insofern auch den hygienischen Anforderungen, die an Zahnbürsten grundsätzlich zu stellen sind, gerecht zu werden.

Gemäß einem jüngeren Lösungsvorschlag (US 6,088,870) sind einzelne Borstenbündel einer Zahnbürste in einem Netz befestigt, welches sich über eine mittlere Ausnehmung des Bürstenkopfes erstreckt. Dieser vorbekannte Lösungsvorschlag zur flexiblen Lagerung der Borstenbündel genügt nicht den zu stellenden hygienischen Anforderungen. Ferner ist die Herstellung der Bürste aufwendig und es besteht die Gefahr, dass die Borstenbündel aufgrund unzureichender Befestigung verloren gehen.

Weiterhin ist es aus der EP-0 756 630 bekannt, sämtliche Borstenbündel eines Bürstenkopfes an einem Borstenbündelträger zu befestigen, der einteilig und aus einer Hartkomponente ausgebildet ist und über ein Filmscharnier aus einem weichelastischen Thermoplasten mit einem den Borstenbündelträger umgebenden Rahmen verbunden ist, der einteilig an dem Bürstengrundkörper vorgesehen ist. Bei einer alternativen Ausführungsform trägt auch der Rahmen Borstenbündel. Diese Ausgestaltung erlaubt zwar eine gewisse Beweglichkeit der Borstenbündel gegenüber dem Bürstengrundkörper. Die Bewegung einer Vielzahl von Borstenbündeln ist jedoch bei dieser Ausführungsform gekoppelt, so dass die notwendige Anpassung der nutzungsseitigen Enden der Borsten an die zu reinigende Kontur nur unzureichend erfolgen kann.

Aus der WO 98/043514 ist es schließlich bekannt, Borstenbündel mit ihren befestigungsseitigen Enden in Hülsen einzusetzen, die in eine den Bürstenkopf bildende weichelastische Komponente eingebettet werden. Bei diesem vorbekannten Lösungsvorschlag können auch mehrere Borstenbündel in ein gemeinsames, die Hülse aufweisendes Verbindungsteil aus dem weichelastischen Werkstoff eingesetzt sein. Es hat sich jedoch herausgestellt, dass die Lagerung der Hülsen in einem weichelastischen Werkstoff die Borstenbündel nicht mit der notwendigen Auszugsfestigkeit in dem Borstenträger sichert. Die elastische Lagerung der Borstenbündel in dem Bürstenkopf einerseits sowie die zur strukturellen Integrität erforderliche Steifigkeit des den Bürstenkopf bildenden Materials andererseits erfordern einen Kompromiss bei der Auswahl des weichelastischen Werkstoffs, welcher den Borstenträger bildet. Insofern stellt auch die aus diesem Dokument vorbekannte Bürste nur eine unzureichend flexible Lagerung bei nicht hinreichender Auszugsfestigkeit der Einzelbündel in dem Bürstenkopf bereit.

Dementsprechend liegt der vorliegenden Erfindung das **Problem** zugrunde, ein Verfahren und eine Vorrichtung zur Herstellung einer Bürste, insbesondere einer Zahnbürste zu schaffen, bei welcher einzelne Borstenbündel mit hoher Elastizität, jedoch guter Auszugsfestigkeit und hinsichtlich ihrer Beweglichkeit im wesentlichen unabhängig voneinander gelagert sind.

Zur **Lösung** des obigen Problems wird mit der vorliegenden Erfindung ein Verfahren mit den Merkmalen von Anspruch 1 vorgeschlagen. Bevorzugte Weiterbildungen der verfahrensmäßigen Lösung sind in den Unteransprüchen 2 bis 15 angegeben.

Bei dem erfindungsgemäßen Verfahren werden in einem ersten Schritt zunächst die Halteelemente in einer ersten Spritzgießform ausgebildet. Diese Halteelemente werden erst danach mit Borstenbündeln versehen, und zwar indem vorzugsweise die Borstenbündel in die Halteelemente eingebracht werden. Dies bedeutet insbesondere, dass die Borstenbündel durch an den Halteelementen ausgesparte Haltekanäle hindurchgeführt und an ihrem befestigungsseitigen Ende gegenüber diesen gesichert werden. Die Sicherung erfolgt hierbei insbesondere durch formschlüssige Anlage der Borstenbündel bei einer Auszugsbewegung in Richtung auf die nutzungsseitigen Enden der Borstenbündel. Diese Sicherung kann beispielsweise durch Anker erfolgen, die zusammen mit den Borstenbündeln nach der Herstellung des Bürstenkörpers in Ausnehmungen des Bürstenkopfes eingeschlagen werden. Mit dem erfindungsgemäßen Verfahren ist es daher möglich, die mit dem Verfahren hergestellte Bürste relativ dünn auszuformen. Die Halteelemente dienen lediglich als Anschlag gegen einseitiges Ausziehen der Borstenbündel. Ihnen muss jedoch nicht zwingend die Aufgabe zukommen, die befestigungsseitigen Enden der Borstenbündel vollständig zu umgeben. Vielmehr bilden die Halteelemente an ihrer, dem befestigungsseitigen Ende der Borstenbündel zugewandten Unterseite vorzugsweise Anschläge für die endseitig vor und/oder nach dem Einbringen in die Halteelemente endseitig verdickten Borstenbündel aus.

Die derart vorbereiteten und vorzugsweise mit Borstenbündel versehenen Halteelemente werden danach in eine Werkzeughälfte einer zweiten Spritzgießform eingesetzt. In dieser erfolgt dann die Verbindung der Halteelemente mit dem Bürstengrundkörper und zwar durch Einspritzen einer weichelastischen Kunststoffkomponente in eine an der zweiten Spritzgießform ausgeformte Kavität. Hierbei werden die Borstenbündel vorzugsweise im Hinblick auf eine möglichst dünne Ausgestaltung des Bürstenkopfes durch Einschluss ihrer befestigungsseitigen Enden zwischen dem Halteelement und der erstarrenden weichelastischen Kunststoffkomponente mit dem Bürstengrundkörper verbunden. Nach spritzgießtechnischer Fertigstellung der Bürste wird die zweite Spritzgießform geöffnet und die so geformte Bürste aus der Spritzgießform entnommen.

Im Hinblick auf eine von dem Spritzgießen entkoppelte Vorbereitung der Halteelemente in einer der späteren Anordnung der Borstenbündel an der Bürste entsprechenden Anordnung wird gemäß einer weiteren bevorzugten Ausgestaltung der vorliegenden Erfindung vorgeschlagen, dass die mit Borstenbündeln versehenen Halteelemente in einer die Werkzeughälfte der zweiten Spritzgießform komplettierenden Lochfeldplatte angeordnet und die Lochfeldplatte wird danach zur Komplettierung der Spritzgießform in diese eingesetzt wird. Die Lochfeldplatte hat in an sich bekannter Weise Haltekanäle zur Aufnahme der einzelnen Borstenbündel und weist vorzugsweise Halteelementaufnahmen auf, in welche die spritzgeformten Halteelemente zur Fixierung derselben eingebracht werden, nachdem die Halteelemente, welche vorzugsweise zumindest nach der spritzgießtechnischen Ausformung derselben durch Abtrennen eventueller Verbindungsstege vereinzelt werden, als einzelne Bauteile an die Lochfeldplatte überführt worden sind. Die so gebildete vorbereitete Lochfeldplatte wird in einem nachfolgenden Schritt beborstet, d.h. in die jeweiligen Haltekanäle der Lochfeldplatte werden die einzelnen Borstenbündel eingebracht, und zwar vorzugsweise so, dass diese die Halteelemente durchragen und mit ihren befestigungsseitigen Enden von diesen abstehen. Die befestigungsseitigen Enden werden danach zur Ausformung einer Verdickung angeschmolzen. Hierdurch wird an den befestigungsseitigen Enden der Borstenbündel eine Anschlagfläche zu der Unterseite der Halteelemente gebildet. Durch diese bevorzugte Ausgestaltung des erfindungsgemäßen Verfahrens lassen sich die Borstenbündel auf einfache Weise gegen Ausziehen der befestigungsseitigen Enden der Borstenbündel aus dem Halteelement sichern.

Im Hinblick auf eine möglichst einfache Ausgestaltung der ersten Spritzgießform werden die Verbindungsstege zunächst als Einheit in dieser ersten Spritzgießform ausgebildet. Dies bedeutet, dass die Kavität der ersten Spritzgießform eine Vielzahl von Formnestern für die Ausformung der Halteelemente aufweist, die zur Ausformung einer die Halteelemente umfassenden Wabenstruktur über Verbindungskanäle miteinander verbunden sind. Der in diesen Verbindungskanälen erstarrende Kunststoff bildet in der Wabenstruktur Verbindungsstege aus, die gemäß einer bevorzugten Weiterbildung der vorliegenden Erfindung vor der Überführung der Haltekanäle zu der zweiten Spritzgießform abgetrennt werden. Das Trennen der Verbindungsstege erfolgt vorzugsweise während die Halteelemente weiterhin in der ersten Spritzgießform befindlich sind.

Die so vereinzelten Halteelemente werden gemäß einer bevorzugten Weiterbildung durch Dorne gegriffen und als Einzelteile an die zweite Spritzgießform, vorzugsweise die Lochfeldplatte zu der zweiten Spritzgießform überführt. Im Hinblick auf eine möglichst einfache Ausgestaltung der Haltedorne erfolgt die Übertragung der Halteelemente bereits in einer Anordnung, die der späteren Anordnung der Borstenbündel an der Bürste entspricht. Dementsprechend werden die Halteelemente vorzugsweise eben in dieser Anordnung bereits ausgeformt.

Insbesondere bei der Verwirklichung des erfindungsgemäßen Verfahrens zur kostengünstigen Massenherstellung von kleinen Bürsten, insbesondere Zahnbürsten, ist es im Hinblick auf eine Verkürzung der Produktionsdauer zu bevorzugen, den Bürstengrundkörper zeitgleich mit den Halteelementen an der zweiten Spritzgießform anzuordnen. Zeitgleich in diesem Sinne bedeutet, dass sich die Zustellbewegungen des Bürstengrundkörpers einerseits und der Halteelemente andererseits zeitlich zumindest teilweise überlagern, d.h. die den Bürstengrundkörper führende Handhabe sowie die Halteelemente bewegende Halterung zeitgleich an der zweiten Spritzgießform im Einsatz sind.

Im Hinblick auf eine mechanische Entkopplung der beiden Handhaben und zur Verkürzung der Zykluszeiten wird gemäß einer weiteren bevorzugten Ausgestaltung der vorliegenden Erfindung hierzu vorgeschlagen, dass der Bürstengrundkörper an einer der Werkzeughälften der zweiten Spritzgießform und die Halteelemente an der anderen Werkzeughälfte dieser Spritzgießform angeordnet werden. Dies lässt sich vorzugsweise dadurch besonders einfach verwirklichen, dass die über die Lochfeldplatte fixierten Halteelemente zunächst mit der Lochfeldplatte durch Anordnen derselben in eine Aufnahme eines Drehtellers der zweiten Spritzgießstation zugeordnet werden, und zwar vorzugsweise während der Einspritz- und Nachdruckphase der zweiten Spritzgießform, d.h. wenn diese geschlossen ist. Zeitgleich wird durch Einspritzen einer Hartkomponente der Bürstengrundkörper ausgeformt, und zwar vorzugsweise in einem Mehrfachwerkzeug, welches sowohl die zweite als auch die dritte Spritzgießform enthält. Nach hinreichender Erstarrung wird dieses Mehrfachwerkzeug geöffnet, die fertigen Bürsten werden entformt und die Bürstengrundkörper werden in einer linearen Bewegung von einer Werkzeughälfte der dritten Spritzgießform an die zweite Spritzgießform überführt. Die Bürstengrundkörper werden als separate Bauteile, d.h. losgelöst von sämtlichen Teilen der zweiten und/oder dritten Spritzgießform in die zweite Spritzgießform eingesetzt, wohingegen die Halteelemente vorzugsweise an der Lochfeldplatte, die einen Teil der zweiten Spritzgießform bildet, fixiert sind. Der Drehteller ist hierbei in einer Werkzeughälfte der zweiten Spritzgießform vorgesehen, und der Borstengrundkörper wird in die andere Werkzeughälfte der zweiten Spritzgießform eingesetzt. Folglich können beide Zustellbewegungen der mittels Spritzgießen vorbereiteten Komponenten Halteelemente einerseits und Bürstengrundkörper andererseits aneinander vorbei und gegebenenfalls einander überlagernd zeitgleich an der zweiten Spritzgießform angeordnet werden. Dies ist insbesondere dann zu bevorzugen, wenn der Bürstengrundkörper die Halteelemente umgebende Abschnitte, insbesondere sämtlicher Halteelemente einfassenden rahmenförmigen Abschnitt aufweist.

Gemäß einer weiteren bevorzugten Ausgestaltung des erfindungsgemäßen Verfahrens wird vorgeschlagen, dass der Bürstengrundkörper in der zweiten Spritzgießstation umspritzt wird. Die Umspritzung kann mit einer weichelastischen Komponente erfolgen, um beispielsweise an dem Bürstengrundkörper haptisch optimierte Griffflächen auszuformen, wobei diese weichelastische Komponente sich von der die Borstenbündel mit dem Bürstengrundkörper unverlierbar verbindenden Kunststoffkomponente hinsichtlich physikalischer Eigenschaften und/oder Form unterscheiden kann.

Zur **Lösung** des vorrichtungsmäßigen Aspekts der vorliegenden Erfindung wird mit dieser eine Vorrichtung mit den Merkmalen von Anspruch 16 vorgeschlagen. Bevorzugte Weiterbildungen der erfindungsgemäßen Vorrichtung sind in den abhängigen Vorrichtungsansprüchen 17 bis 34 angegeben.

Die erfindungsgemäße Vorrichtung dient der Herstellung einer Bürste, insbesondere einer Zahnbürste, mit einem Bürstenkopf, der in an sich bekannter Weise Borstenbündel trägt, die an ihren befestigungsseitigen Enden von Halteelementen umgeben sind. Die Halteelemente sind in einer weichelastischen Matte eingebettet, die eine im wesentlichen flächige Erstreckung hat. Die Matte deckt eine an dem Bürstenkopf ausgebildete Ausnehmung ab. Es können auch mehrere Ausnehmungen an dem Bürstenkopf vorgesehen sein.

Zur Herstellung dieser Bürste weist die erfindungsgemäße Vorrichtung eine erste Spritzgießform auf, die eine Vielzahl von jeweils die Halteelemente abbildenden und miteinander verbundenen Halteelementkavitäten aufweist. Die Lage der Halteelementkavitäten in der Spritzgießform entspricht der Lage der Borstenbündel an dem Bürstenkopf nach der vollständigen Herstellung der Bürste. Zum Ausschieben der in der ersten Spritzgießform hergestellten und zunächst miteinander verbundenen Halteelemente weisen die Halteelementkavitäten an einer ihrer Stirnseiten einen quer zur Werkzeugtrennebene beweglichen Stift auf, der die Werkzeugkavitäten endseitig abschließt. Vorzugsweise ist zu jedem der Halteelementkavitäten je ein Stift vorgesehen.

Die erfindungsgemäße Vorrichtung weist vorzugsweise eine Trenneinrichtung auf, mit der die Halteelemente voneinander getrennt werden können. Aufgrund dieser Trenneinrichtung werden die Halteelemente als separate Bauteile in der weichelastischen Masse aufgenommen. Eine hohe Beweglichkeit einzelner Borstenbündel kann aber auch dadurch erzielt werden, dass die Halteelemente verbindende Stege sehr dünn und nach Art eines Filmscharniers ausgebildet werden, so dass die Nachgiebigkeit einzelner Halteelemente und der diesen Halteelementen zugeordneten Borstenbündeln überwiegend, wenn nicht sogar ausschließlich durch die elastischen Eigenschaften der weichelastischen Masse bestimmt und beschränkt wird. Zum Einbetten in die weichelastische Masse weist die erfindungsgemäße Vorrichtung eine zweite Spritzgießform zum Abformen der weichelastischen Matte auf, deren eine Werkzeughälfte die Borstenbündel aufnehmende Haltekanäle aufweist, die in einer der Lage der Borstenbündel an dem Bürstenkopf entsprechenden Anordnung zueinander vorgesehen sind. Die Lage der Haltekanäle entspricht danach der Lage der Halteelementkavitäten, so dass die in der ersten Spritzgießform hergestellten Halteelemente ohne Veränderung ihres seitlichen Abstandes zueinander an die eine Werkzeughälfte der zweiten Spritzgießform übertragen werden können. Diese weist den Haltekanälen zugeordnete Haltemittel auf, mit denen die Haltemittel im Bereich der Mündung des Haltekanals gehalten werden können. Die eine Werkzeughälfte umschließt mit der anderen Werkzeughälfte der zweiten Spritzgießform bei geschlossener Spritzgießform einen Hohlraum, der derart bemessen ist, dass ein vorgefertigter Bürstenkopf in diesen eingesetzt werden kann. Dieser Bürstenkopf umgibt mit seiner in dem Bürstenkopf ausgesparten Ausnehmung die Mattenkavität. In diese Mattenkavität ragen die an den Mündungen der Haltekanäle angeordneten Halteelemente hinein. Beim Einspritzen eines thermoplastischen Elastomers werden die Halteelemente dementsprechend von dem thermoplastischen Elastomer umflossen und in der weichelastischen Matte aufgenommen, die ihrerseits mittels Spritzgießen mit der inneren Umfangsfläche der Ausnehmung und damit mit dem Bürstenkopf verbunden wird.

Die Halteelemente können als becherförmige Halteelemente ausgebildet sein und mittlere zylindrische jedoch endseitig geschlossene Aufnahmen aufweisen, in die nach der spritzgießtechnischen Herstellung des Bürstenkopfes zusammen mit der die Halteelemente umfassenden Matte Borstenbündel eingebracht und durch metallische Anker in an sich bekannter Weise befestigt werden. In diesem Fall ist der Vorrichtung zur Herstellung der Bürste eine Beborstungsstation nachgeordnet. Alternativ kann die Beborstung auch vor dem Umspritzen der Halteelemente mit weichelastischer Masse an einer Beborstungsstation erfolgen, die nachfolgend unter Bezugnahme auf die Beschreibung noch näher erläutert werden wird.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser zeigen:
- Figur 1: eine Längsschnittansicht durch ein Ausführungsbeispiel einer ersten Spritzgießform;
- Figur 2: die in Figur 1 gezeigte Darstellung nach dem Trennen der Halteelemente;
- Figur 3: eine Lochfeldplatte in einer Halteelementübergabestation;
- Figur 4: eine Lochfeldplatte in einer Anschmelzstation,
- Figur 5: eine Draufsicht auf ein Spritzgießwerkzeug;
- Figur 6: eine Längsschnittansicht einer dritten Spritzgießform;
- Figur 7: eine Längsschnittansicht einer zweiten Spritzgießform;
- Figur 8: eine Schnittansicht einer mit der Vorrichtung hergestellten Zahnbürste;
- Figur 9: ein vergrößertes Detail der in Figur 8 gezeigten Schnittansicht;
- Figur 10: eine Schnittansicht eines zweiten Ausführungsbeispiels eines Spritzgießwerkzeugs in geöffneter Stellung; und
- Figur 11: das in Figur 10 gezeigte Ausführungsbeispiel bei geschlossenem Werkzeug.

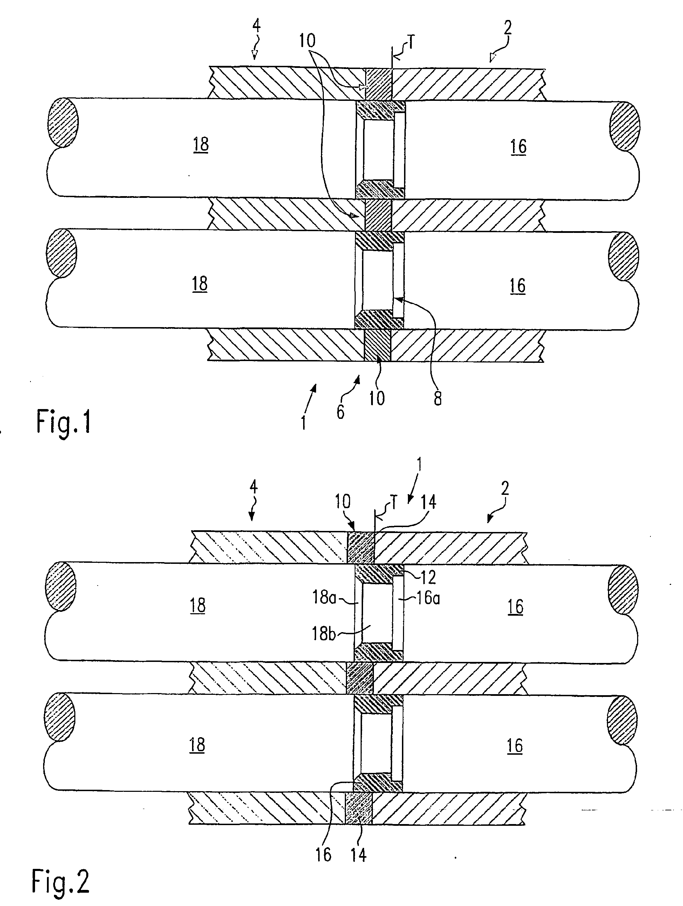

Die Figur 1 zeigt eine Längsschnittansicht durch ein vergrößertes Detail einer ersten Spritzgießform 1 mit einer düsenseitigen ersten Werkzeughälfte 2 und einer fahrseitigen ersten Werkzeughälfte 4. Zwischen den beiden ersten Werkzeughälften 2, 4 ist ein erstes Formnest 6 ausgebildet, welches mit einem hier nicht dargestellten Plastifizieraggregat für eine Hartkomponente, insbesondere Polypropylen kommuniziert. Das erste Formnest 6 umfasst eine Vielzahl von Halteelementkavitäten 8, die über Durchlässe 10 miteinander verbunden sind.

Die Durchlässe 10 sind derart dimensioniert, dass das erste Formnest 6 mit seinen sämtlichen Halteelementkavitäten 8 von einer Anspritzstelle vollständig mit der Hartkomponente ausgefüllt werden kann. Hierbei bilden sich in den Halteelementlcavitäten 8 Halteelemente 12 aus, die über in den Durchlässen 10 abgeformte Stege 14 miteinander verbunden sind (vgl. Figur 2).

Jede der Halteelementkavitäten 8 weist stirnseitig einen auf der Düsenseite der ersten Spritzgießform 1 angeordneten Stift 16 sowie einen an der gegenüberliegenden Stirnseite der Halteelemente 12 angeordneten Gegenstift 18 auf. Beide Stifte 16, 18 sind in dem Werkzeug quer zur Werkzeugtrennebene T beweglich. Die Stifte 16, 18 weisen an ihrer Stirnseite eine der gewünschten Innenkontur des Halteelementes 12 entsprechende Kontur auf. So ist an dem Stift 16 ein zylindrischer Kragen 16a ausgeformt, wohingegen an der Stirnseite des Gegenstiftes 18 ein kegelstumpfförmigen Abschnitt 18a und ein Zylinderabschnitt 18b ausgeformt sind. Der zylindrische Kragen 16a, der Zylinderabschnitt 18b und der kegelstumpfförmige Abschnitt 18a sind konzentrisch zueinander und zu der Achse der Stifte 16, 18 angeordnet und schließen zwischen ihrer äußeren Umfangsflächen und der jeweils umgebenden Wandung des ersten Formnestes 6 die ringförmig ausgeformte Halteelementkavität 8 ein.

Die äußere Kontur der Stifte 16, 18 entspricht zumindest im Bereich der Halteelementkavität 8 der äußeren Umfangsfläche dieser Kavität. Vorliegend sind die Stifte 16, 18 sowie die Halteelementkavität 8 als Bauteile mit kreisrunder Querschnittsform ausgebildet.

Nach der spritzgießtechnischen Herstellung der Halteelemente 12 zusammen mit den Stegen 14 werden die Stifte 16, 18 zeitgleich in axialer Richtung unter Zwischenlage der gespritzten Halteelemente 12 in die in Figur 2 gezeigte Stellung verschoben. Hierbei ist das erste Formnest 6 weiterhin geschlossen. Dies führt dazu, dass die Halteelemente 12 von den Stegen 14 abgeschert werden. Die Bewegung der Stifte 16, 18 erfolgt vorzugsweise in Richtung auf die düsensseitige erste Werkzeughälfte 2. Nach Beendigung dieses Vorganges werden die Werkzeughälften 2, 4 geöffnet und der Gegenstift 18 wird in axialer Richtung von dem Halteelement 12 weg bewegt. Die spritzgegossenen Halteelemente 12 werden weiterhin durch die an dem Stift 16 ausgebildete stirnseitige Kontur auf dem jeweiligen Stift 16 gehalten. Die Stege 14 werden verworfen.

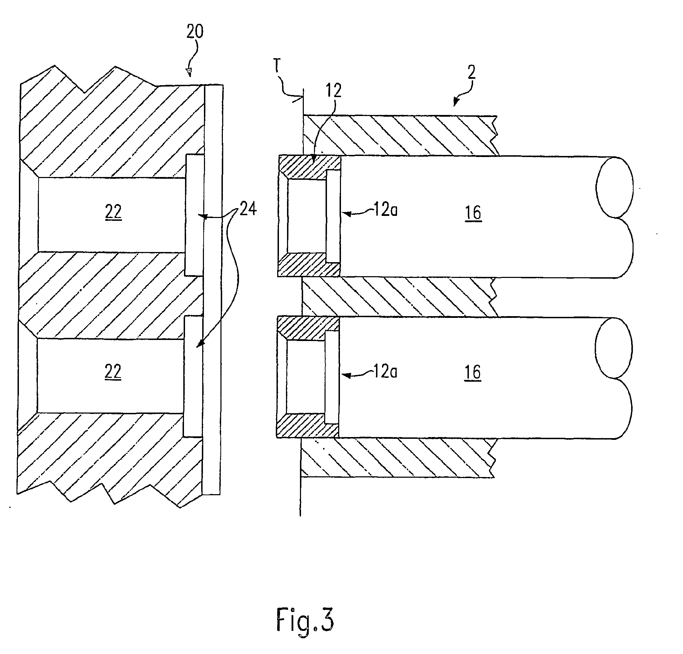

In Figur 3 ist eine Lochfeldplatte 20 gezeigt, in der mehrere Haltekanäle 22 ausgespart sind, die mündungsseitig jeweils eine Halteelementaufnahme 24 aufweisen, die durch einen zylindrischen Abschnitt gebildet ist, der einen größeren Durchmesser als die Haltekanäle 22 aufweisen. Dieser Durchmesser entspricht in etwa dem Außendurchmesser des zugeordneten Halteelementes 12. Die Haltekanäle 22 fluchten jeweils mit den Stiften 16 der zugeordneten Halteelemente 12. Die Anordnung der Haltekanäle 22 in der Lochfeldplatte 20 entspricht der Anordnung der Halteelementkavitäten 8 in dem ersten Formnest 6. Der Durchmesser der Haltekanäle 22 entspricht im wesentlichen dem Durchmesser des Zylinderabschnitts 16a des Stiftes 16, durch den beim Spritzgießen der Halteelemente 12 an diesen ein mittlerer Bündeldurchlass 12a gebildet wird.

Durch zeitgleiche Betätigung sämtlicher Stifte 16 werden die Halteelemente 12 von der düsenseitigen Werkzeughälfte 2 herausgehoben und in die Halteelementaufnahmen 24 der Lochfeldplatte 20 eingesetzt. Diese Halteelementaufnahme 24 ist derart dimensioniert, dass nach dem Einsetzen der Halteelemente 12 diese in der Lochfeldplatte 20 gehalten werden und sich von den Stiften 16 beim Zurückziehen derselben in die erste Werkzeughälfte 2 lösen.

In Figur 3 befindet sich die Lochfeldplatte 20 an einer nicht näher dargestellten Halteelementübergabestation und wird von dort nach Übergabe der Halteelemente 12 an eine Beborstungsstation übergeben, in der die Haltekanäle 22 der Lochfeldplatte 20 fluchtend zu Übergabekanälen angeordnet werden, die an einer Übergabeplatte ausgebildet sind. Die Übergabekanäle enthalten Borstenbündel bestehend aus einer Vielzahl von Kunststoffmonofile, die auf eine gewünschte Länge geschnitten sind und entweder als Endlosmaterial oder als Kurzschnitte in die Übergabekanäle eingestopft worden sind. Die Anordnung der Übergabekanäle in der Übergabeplatte entspricht der Anordnung der Haltekanäle 22 in der Lochfeldplatte 20. An der Beborstungsstation greift eine nicht näher dargestellte Schiebeeinrichtung in die Übergabekanäle ein und schiebt die einzelnen Borstenbündel von den Kanälen in die Haltekanäle 22, die vorzugsweise am Ende dieser Ausschiebebewegung mit ihren befestigungsseitigen Enden durch den Bündeldurchlass 12a des Halteelementes 12 hindurchgeschoben sind und die Halteelemente 12 endseitig überragen. Das Zuführen der Borstenbündel 100 in der Beborstungsstation erfolgt vorzugsweise zunächst durch die Haltekanäle 22 und danach erst durch den Bündeldurchlass 12a.

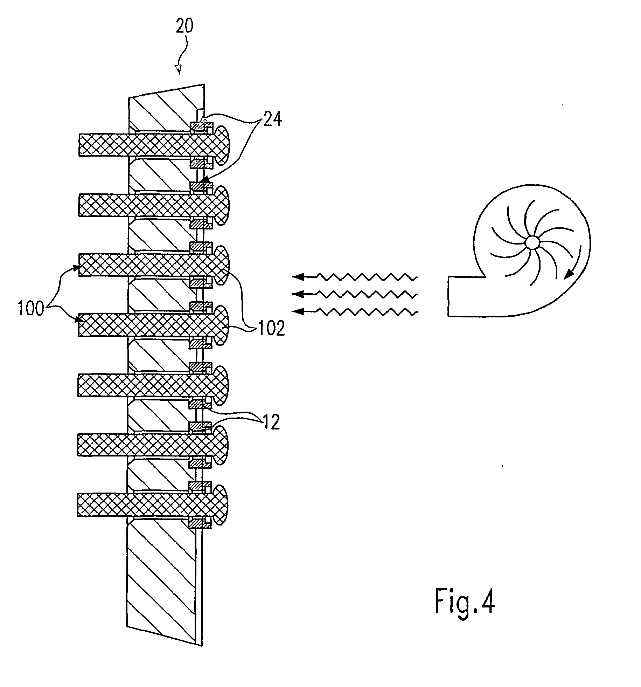

Die derart vorbereitete Lochfeldplatte 20 wird dann auf ihrer Umlaufstrecke zu einer in Figur 4 gezeigten Anschmelzstation verbracht. Dort werden die befestigungsseitigen Enden der Borstenbündel 100 zu einer Verdickung 102 angeschmolzen, die größer als der Durchmesser des Bündeldurchlasses 12a des zugeordneten Halteelementes 12 ist. Das Anschmelzen erfolgt in an sich bekannter Weise entweder mit heißer Luft oder mit einer die befestigungsseitigen Enden der Borstenbündel 100 berührenden Heizplatte. Vorzugsweise werden die Borstenbündel 100 beim Anschmelzen der Verdickung 102 plastisch verformt und gegen die Mündung des Bündeldurchlasses 12a gedrückt, um diesen für das nachfolgende Umspritzen der Halteelemente 12 mit weichelastischem Kunststoff gegen diesen abzudichten.

Der Anschmelzstation kann wenigstens eine weitere, hier nicht dargestellte Vorbereitungsstation für die Borstenbündel 100 vorgeschaltet sein, an der die mit Borstenbündeln 100 versehene Lochfeldplatte 20 gehalten wird, um die noch lose in den Haltekanälen 20 gehaltenen Borstenbündel 100 weiter vorzubereiten, beispielsweise durch axiales Verschieben einzelner Filamente gegeneinander zu konturieren (Schüsseln) und/oder die nutzungsseitigen Enden der Borstenbündel 100 zu beschleifen.

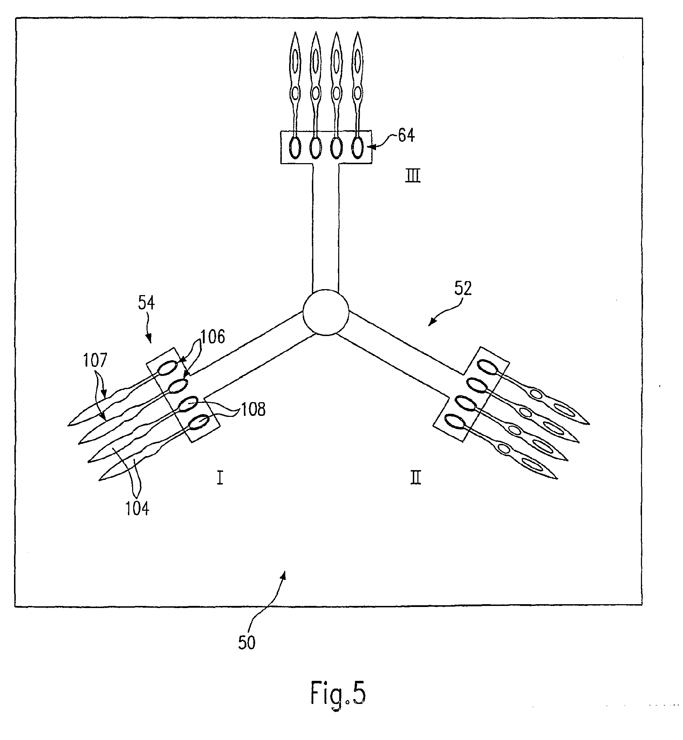

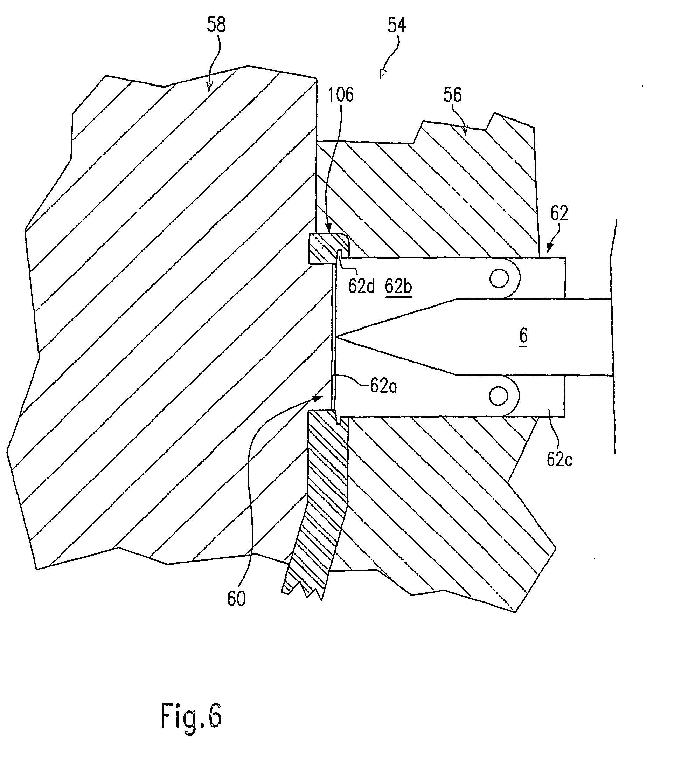

Neben der in den Figuren 1 und 2 gezeigten ersten Spritzgießform 1 weist das Ausführungsbeispiel der erfindungsgemäßen Vorrichtung eine zweite Spritzgießform 64 auf, die in Figur 5 teilweise als Teil eines Mehrfachwerkzeuges mit drei Stationen I-III gezeigt ist. Die Figur 5 zeigt eine Draufsicht auf den düsenseitigen Teil des geöffneten Spritzgießwerkzeuges 50. An jeder der Station I-III des Spritzgießwerkzeuges 50 sind vier Kavitäten zur Ausbildung/Umspritzung eines Griffstieles 104 einer Zahnbürste ausgespart, die mit zugeordneten Kavitäten, die an einer Wendeeinheit 52 ausgespart sind, kommunizieren. In der ersten Spritzgießstation I, die in der Schnittansicht gemäß Figur 6 näher dargestellt ist, wird ein den Griffstiel 104 und einen Bürstenkopf 106 umfassender Bürstengrundkörper 107 aus einer Hartkomponente, insbesondere aus einem Polypropylen hergestellt. Dieser wird durch Drehung der Wendeeinheit 52 in die zweite Station II überführt, in der der Griffstiel 104 mit einer Weichkomponente, insbesondere mit einem thermoplastischen Elastomer umspritzt wird.

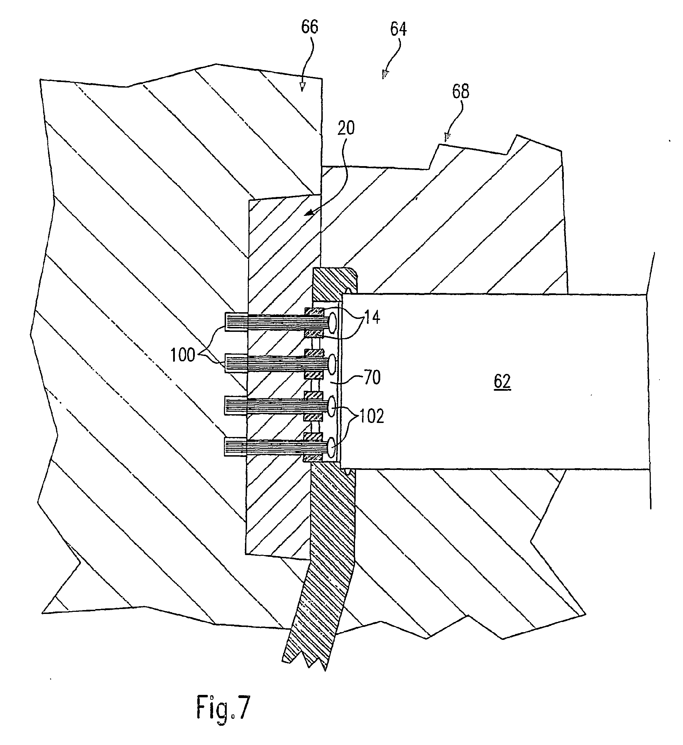

Durch Drehung um weitere 120° wird der derart hergestellte und umspritzte Bürstengrundkörper 107 in die dritte Station III verbracht. Eine Längsschnittansicht durch diese dritte Station III ist in Figur 7 gezeigt, auf die nachfolgend noch näher eingegangen werden soll.

An der in Figur 6 in Längsschnittansicht gezeigten ersten Spritzgießstation 1 ist eine Spritzgießform 54 ausgebildet, die in den Ansprüchen als "dritte Spritzgießform" bezeichnet ist und deren eine düsenseitige dritte Werkzeughälfte 56 die Kontur des Bürstenkopfes 106 vorgibt, während die fahrseitige dritte Werkzeughälfte 58 im wesentlichen dessen Oberfläche und Teile der äußeren Umfangsfläche vorgibt. Die fahrseitige dritte Werkzeughälfte 58 weist ferner einen vorliegend fest angeordneten Dorn 60 auf, der mit der Stirnseite eines Kernes 62 zusammenwirkt, der in der düsenseitigen dritten Werkzeughälfte 56 beweglich aufgenommen ist. Der vordere in das Formnest hineinragende und stirnseitig an den Dorn 60 anlegbare Endabschnitt 62a des Kernes 62 ist zylinderförmig mit einem dem Durchmesser des Dornes 60 entsprechenden Durchmesser ausgebildet. Der Kern 62 ist als Faltkern mit mehreren verschwenkbaren Kernelementen 62b ausgebildet, an deren stirnseitigen Enden den Endabschnitt 62a ausbildende Segmente angeordnet sind, wobei der Kern 62 an seiner Basis 62c einen größeren Durchmesser als der Dorn 60 aufweist. Am Übergang zwischen dem zylindrischen Endabschnitt 62a und der Kernbasis 62c bilden die Kernelemente 62b einen den Außenumfang der Kernbasis 62c überragenden Formabschnitt 62d aus. Der Dorn 60, der Endabschnitt 62a, der Formabschnitt 62d und ein benachbart hierzu befindlicher, in Richtung auf die Kernbasis 62 sich erstreckender Endbereich der Kernbasis 62c bilden in der Kavität der dritten Spritzgießform 54 eine von der Kavität umfänglich umschlossene Insel aus. Beim Einspritzen der Hartkomponente in die Kavität der dritten Spritzgießform 54 wird der Bürstenkopf 106 zusammen mit dem Griffstiel 104 ausgeformt. Hierbei wird im Bereich des Bürstenkopfes 106 durch Zusammenwirken des Dornes 60 und des Kernes 62 vorliegend eine mittlere Ausnehmung 108 an dem Bürstenkopf 106 ausgespart. Der Formabschnitt 62d sorgt dafür, dass an der Innenumfangsfläche der Ausnehmung 108 eine sich zu der Ausnehmung 108 öffnende Nut an dem Bürstenkopf 106 frei bleibt.

Beim Umsetzen der auf diese Weise hergestellten Grundkörper in die Stationen II und III wird der Grundkörper durch die in der Ausnehmung 108 eingebrachten Kernelemente 62 sicher an der dritten Station (düsenseitigen Werkzeughälfte) gehalten.

In der vorliegenden Beschreibung werden als erste, zweite und dritte Werkzeughälften die jeweiligen Werkzeughälften des ersten, zweiten und dritten Werkzeuges bezeichnet. Zwei Werkzeughälften bilden ein komplettes Werkzeug aus. Bei dem gezeigten Ausführungsbeispiel sind im Übrigen die zweiten und dritten Werkzeughälften Teil eines Mehrfachwerkzeuges, in dem auch eine Umspritzung des Grundkörpers stattfindet (vgl. Figur 5).

Nach der spritzgießtechnischen Herstellung des aus Polypropylen gebildeten Bürstengrundkörpers 107 wird das Formnest durch Auseinanderfahren der dritten Werkzeughälfte geöffnet. Der Bürstengrundkörper 107 bleibt hierbei in der in Figur 6 gezeigten Lage in der düsenseitigen Werkzeughälfte 56.

In an sich bekannter Weise wird der Bürstengrundkörper 107 in der zweiten Station II umspritzt und schließlich in der dritten Station III mit den vorbereiteten Borstenbündeln in einer Weise verbunden, die nachfolgend unter Bezugnahme auf Figur 7 näher erläutert wird.

In Figur 7 ist eine Schnittansicht durch ein Ausführungsbeispiel der zweiten Spritzgießform 64 der vorliegenden Erfindung gezeigt. Diese zweite Spritzgießform 64 weist eine vorliegend fahrseitig angeordnete zweite angeordnete Werkzeughälfte 66 auf, welche die vorstehend unter Bezugnahme auf die Figuren 3 und 4 beschriebene vorbereitete Lochfeldplatte 20 mit Borstenbündeln 100 trägt. Die befestigungsseitigen Enden der Borstenbündel 100 mit ihrer Verdickung 102 und den zu etwa 2/3 aus den Haltekanalaufnahmen 24 herausragenden Halteelementen 14 befinden sich innerhalb der Ausnehmung 108 des Bürstenkopfes 106. Der Kern 62 befindet sich in einer mit Bezug auf Figur 6 bereits beschriebenen Lage, in der der Kern 62 mit seinem zylindrischen Endabschnitt 62a teilweise in die Ausnehmung 108 eingreift und der sich daran anschließende größere Durchmesserbereich des Kernes 62 einen Kranz 110 an dem Bürstenkopf 106 freihält, der eine größere radiale Öffnung als die Ausnehmung 108 aufweist.

Wie bereits der Figur 5 zu entnehmen ist, entspricht die düsenseitige, andere zweite Werkzeughälfte 68 der düsenseitigen einen dritten Werkzeughälfte 56 der dritten Spritzgießform 54. Genauer gesagt handelt es sich um den vorderen, den Bürstenkopf 106 abbildenden Teil der Spritzgießform 54, der durch die Wendeeinheit 52 zu den jeweiligen Stationen I-III verbracht wird.

Bei geschlossener zweiter Spritzgießform 64 wird nun thermoplastisches Elastomer zwischen die Lochfeldplatte 20 und den Kern 62 und in die Ausnehmung 108 gespritzt. Eine innerhalb der Ausnehmung 108 verbleibende Mattenkavität 70 wird hierbei mit thermoplastischem Elastomer unter Einbettung der befestigungsseitigen Enden der Borstenbündel 100 und der überwiegenden axialen Länge der Halteelemente 12 ausgefüllt. Hierdurch wird bündig zu der Oberseite des Bürstenkopfes 106 eine die Halteelemente 12 und die befestigungsseitigen Enden der Borstenbündel 100 umfassende weichelastische Matte 112 ausgeformt und mit dem Bürstenkopf 106 verbunden. Die Borstenbündel 100 sind in der Matte 112 mit hoher Elastizität gelagert und können einer übermäßigen axialen Anpresskraft sowie gegebenenfalls einem seitlichen Biegemoment durch elastische Verformung in der Matte 112 ausweichen, so dass eine Verletzung der empfindlichen Mundschleimhäute bei der Benutzung der Zahnbürste vermieden wird.

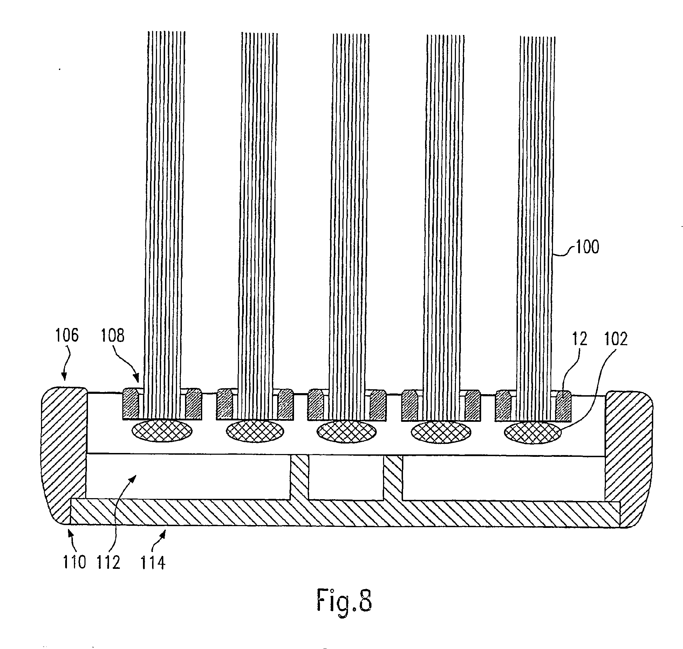

Das vorstehend beschriebene Ausführungsbeispiel weist ferner eine hier nicht dargestellte Verbindungsstation auf, in der ein mittels Spritzgießen hergestelltes Deckplättchen mit dem Bürstenkopfkörper 106 nach Entformen aus der zweiten Spritzgießform 64 zur rückseitigen Abdeckung der Ausnehmung 108 verbunden wird. In diesem Zusammenhang wird auf Figur 8 verwiesen, welche eine Längsschnittansicht durch den Bürstenkopf 106 einer entsprechend hergestellten Bürste zeigt. Das Deckplättchen ist mit Bezugszeichen 114 gekennzeichnet und befindet sich in dem Kranz 110. Folglich weist die Rückseite des Bürstenkopfes 106 keinen Absatz auf, was aus hygienischen Gründen ebenfalls zu bevorzugen ist. Das Deckplättchen 114 hat an seiner Innenseite mehrere Stege 116, durch welche die elastische Abstützung einzelner Borstenbündel 100 beeinflusst wird. Die Anordnung der Stege steht im Belieben des Fachmannes zur bestmöglichen Beeinflussung des elastischen Verhaltens der Borstenbündel 100.

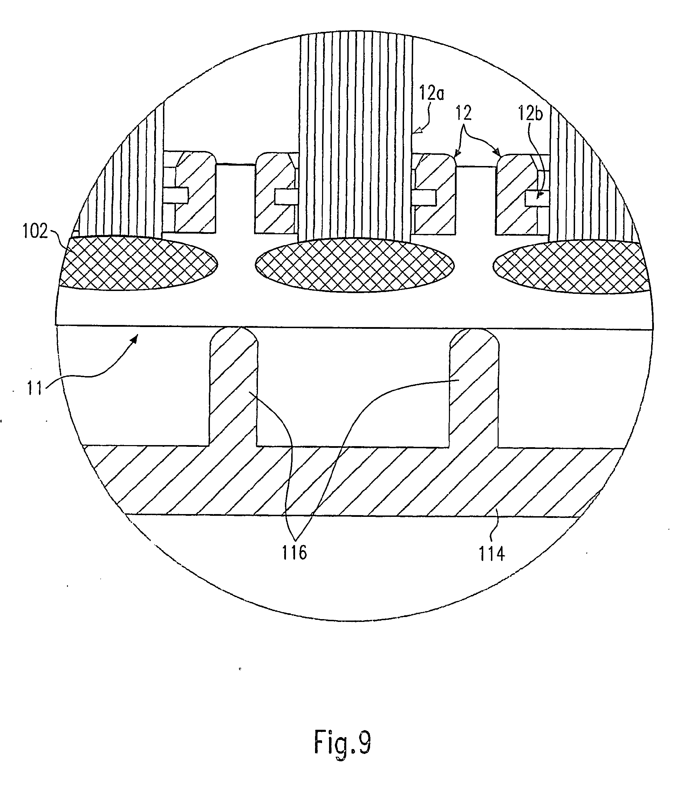

Ein vergrößertes Detail der in Figur 8 gezeigten Bürste ist der Figur 9 zu entnehmen. Bei dieser Abwandlung weist jedes der Halteelemente 12 eine sich zu dem Bündeldurchlass 12a öffnende Ringnut 12b auf, welche durch korrespondierende Ausgestaltung an der äußeren Umfangsfläche des Stiftes 16 bzw. des Gegenstiftes 18 ausgeformt werden kann. Es ist hierzu nicht erforderlich, einen Faltkern vorzusehen. Vielmehr kann der durch die Ringnut 12b gebildete Hinterschnitt zwangsentformt werden.

Die vorliegende Erfindung ist nicht auf die beschriebene Vorrichtung beschränkt. Erfindungswesentlich kann auch das Verfahren sein. Es handelt sich hierbei insbesondere um ein Verfahren zur Herstellung einer Bürste mit einem Bürstenkörper, der eine von Borstenbündeln überragte Oberfläche aufweist, die durch ein Borstenverbundteil gebildet ist, mit folgenden Schritten: Spritzgießen einer Vielzahl von Halteelementen mit Aufnahmen für die Borstenbündel in einem ersten Spritzgießwerkzeug, wobei jedes der Halteelemente eine Aufnahme für je ein Borstenbündel aufweist und die Halteelemente zeitgleich in einer Anordnung zueinander ausgebildet werden, die der Anordnung der befestigungsseitigen Enden der Borstenbündel in der herzustellenden Bürste entspricht; Entformen der Halteelemente und Übergabe an ein Haltekanäle für die Borstenbündel aufweisendes Werkzeugteil eines zweiten Spritzgießwerkzeuges; Einbringen der Borstenbündel in die zugeordneten Halteelemente und Befestigen der Borstenbündel gegenüber den Halteelementen derart, dass die Borstenbündel jedenfalls gegen Herausziehen ihres befestigungsseitigen Endes aus den Aufnahmen gesichert sind; Schließen des zweites Spritzgießwerkzeuges und Einbetten der Halteelemente in eine weichelastische Masse zur Ausbildung des Borstenverbundteils durch Umspritzen der Haltelemente mit der weichelastischen Masse. Dieses Borstenverbundteil kann vorzugsweise die vorstehend in dem Ausführungsbeispiel beschriebene Matte 112 sein, die eine überwiegend flächige Erstreckung hat.

Gemäß einer weiteren bevorzugten Ausgestaltung der verfahrensmäßigen Erfindung werden die Halteelemente in einem Verbund spritzgegossen und einige, vorzugsweise sämtliche, die Halteelemente verbindende Verbindungen vor Übergabe der Halteelemente an das Werkzeugteil von den übrigen Halteelementen abgetrennt.

Gemäß einer weiteren bevorzugten Ausgestaltung des verfahrensmäßigen Aspektes der vorliegenden Erfindung werden die Halteelemente mit jeweils einer Aufnahme für je ein Borstenbündel versehen und als separate Bauteile an das Werkzeugteil übergeben und mit den Aufnahmen fluchtend zu den Haltekanälen des Werkzeugteiles angeordnet.

Gemäß einer weiteren bevorzugten Ausgestaltung des Verfahrens wird vorgeschlagen, dass die Halteelemente als Bündeldurchlässe ausbildende Halteringe geformt werden und dass die Borstenbündel in die Bündeldurchlässe eingeführt und an ihren befestigungsseitigen Enden mit einer Verdickung versehen werden, die in radialer Richtung des Borstenbündels größer als der Durchmesser des zugeordneten Bündeldurchlasses ist.

Weiterhin ist es zu bevorzugen, dass die Verdickungen der Borstenbündel vor dem vollständigen Erkalten durch plastische Verformung verbreitert und gegen die Mündung der Bündeldurchlässe gedrückt werden.

Bei dem Verfahren können die Borstenbündel auch alternativ zum Anschmelzen einer Verdickung konventionell befestigt werden. Hierzu werden vorzugsweise die Halteelement als endseitig geschlossene Topfelemente ausgeformt, in denen vorzugsweise nach dem Umspritzen der Topfelemente mit weichelastischer Masse jeweils ein Borstenbündel durch Einbringen eines Ankers an seinem befestigungsseitigen Ende gesichert wird.

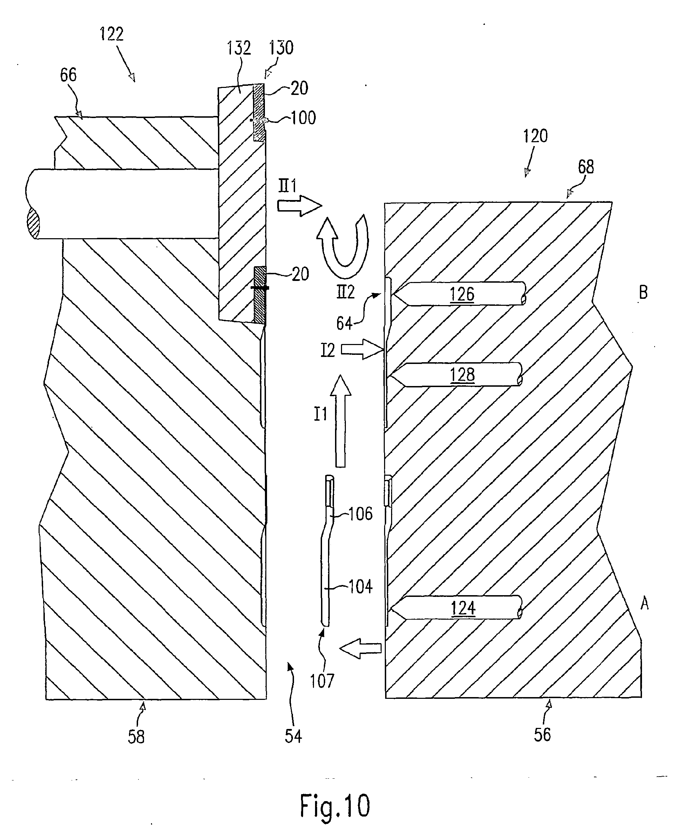

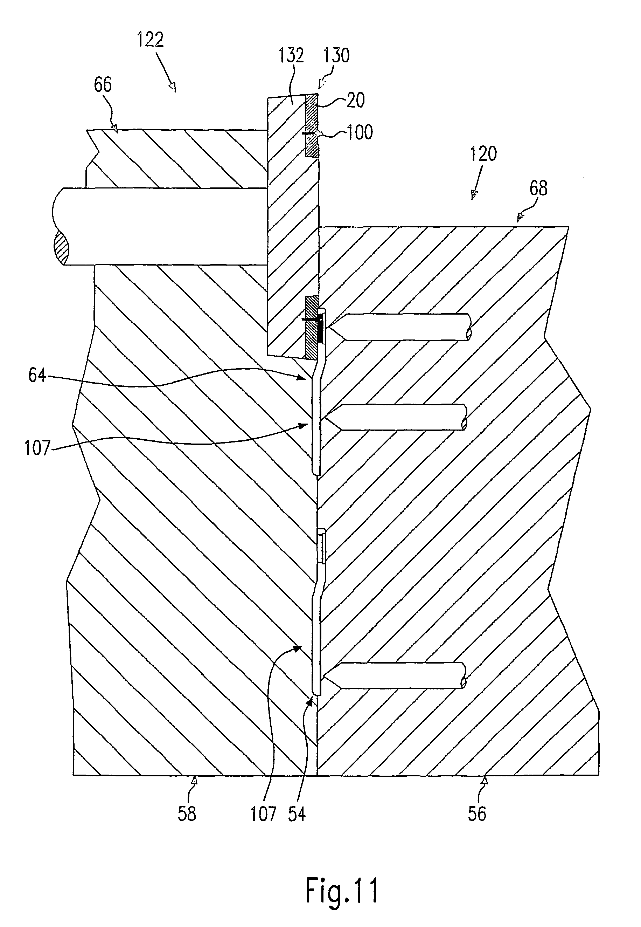

Die Figuren 10 und 11 zeigen ein alternatives Ausführungsbeispiel eines mehrere Stationen A, B aufweisenden Mehrfachwerkzeuges. Das Mehrfachwerkzeug ist dadurch gekennzeichnet, dass mehrere identisch ausgebildete Kavitäten rechtwinklig zur Zeichnungsebene hintereinander an dem Spritzgießwerkzeug ausgespart sind. Gleiche Bauteile sind gegenüber den vorher diskutierten Ausführungsbeispielen mit gleichen Bezugzeichen gekennzeichnet. Das Ausführungsbeispiel nach den Figuren 10 und 11 zeigt ein Mehrstationen-Mehrfachwerkzeug mit zwei Werkzeugplatten 120, 122, die aufeinander zu beweglich sind, wobei die düsenseitige Werkzeugplatte 120 die düsenseitige zweite Werkzeughälfte 68 der zweiten Spritzgießform 64 und die düsenseitige dritte Werkzeughälfte 56 der dritten Spritzgießform 54 enthält. An der der düsenseitigen dritten Werkzeughälfte 56 ist eine Einspritzdüse 124 für eine Hartkomponente vorgesehen; an der zweiten Werkzeughälfte 64 eine Einspritzdüse 126 für die weichelastische Kunststoffkomponente und eine Einspritzdüse 128 für die den weichelastischen Thermoplasten 128 zum Umspritzen eines Griffstieles 104 des Grundkörpers 107. Die Einspritzdüse 124 kommuniziert mit einer in der düsenseitigen dritten Werkzeughälfte 156 ausgesparten Kavität, die bei geschlossenem Mehrfachwerkzeug mit einer korrespondierend hierzu ausgebildeten Kavität der fahrseitigen dritten Werkzeughälfte 58 ein Formnest zur Ausformung des Grundkörpers 107 ausbildet. Dieses Formnest ist gegenüber der Darstellung in Figur 6 vorliegend vereinfacht dargestellt.

Die Einspritzdüse 126 kommuniziert mit der Rückseite des Bürstenkopfes 106, die Einspritzdüse 128 kommuniziert mit der an der zweiten Spritzgießform 64 ausgeformten Kavität im Bereich des Griffstiels 104. Auf der gegenüberliegenden fahrseitigen Seite ist an der zweiten Werkzeughälfte eine Kavität ausgespart, die griffstielseitig unmittelbar in der Werkzeugplatte 122 ausgeformt ist, wohingegen die Kavität im Bereich des Bürstenkopfes 106 durch die Lochfeldplatte 20 gebildet ist, wie dies bereits insbesondere unter Bezugnahme auf Figur 7 beschrieben wurde. Bei dem gezeigten Ausführungsbeispiel befindet sich die Lochfeldplatte 20 in einer Aufnahme 130, die in einem drehbar an der Werkzeugplatte 122 gelagerten Drehteller 132 ausgespart ist. Der Drehteller 132 hat an gegenüberliegenden Längsseiten jeweils zwei Aufnahmen 130 zur Aufnahme jeweils einer Lochfeldplatte 20. Die Anordnung des Drehtellers 132 in der Werkzeugplatte 122 in Beug auf die Abmessung der anderen Werkzeugplatte 122 ist derart gewählt, dass die Aufnahme 130 am freien Ende des Drehtellers 132 das geschlossene Mehrfachwerkzeug überragt.

In dem in den Figuren 10 und 11 gezeigten Ausführungsbeispiel erfolgt die Herstellung einer Bürste folgendermaßen: Bei geschlossenem Werkzeug wird eine mit Halteelementen bestückte Lochfeldplatte 20 in die das Werkzeug überragende Aufnahme 130 des Drehtellers 132 eingesetzt. Das Werkzeug wird geöffnet, der Drehteller 132 wird in einer ersten Richtung (vgl. Pfeil II-1) aus der Werkzeugplatte 122 herausgehoben und um 180° (vgl. Pfeil II-2) gedreht. Aufgrund dieser Zuführbewegung werden die in der Lochfeldplatte 20 ausgesparten Ausnehmungen für den Bürstenkopf 106 einer jeden Bürste korrespondierend zu den Kavitäten, insbesondere für den Griffstiel 104 des Gruridkörpers 107 ausgerichtet. Die Werkzeugplatten 120, 122 werden nun aufeinander zu gefahren; die an der ersten Spritzgießstation A vorgesehene dritte Spritzgießform sowie die an der zweiten Spritzgießstation B vorgesehene zweite Spritzgießform 64 werden geschlossen. Nun werden durch die Düsen 124, 126 und 128 die entsprechenden thermoplastischen Kunststoffe in die beiden Spritzgießformen 54, 64 eingespritzt. Dabei wird in der dritten Spritzgießform 54 der Grundkörper 107 aus einer Hartkomponente ausgebildet. Ein in einem vorherigen Spritzgießzyklus ausgeformter und in der zweiten Spritzgießform 64 angeordneter weiterer Grundkörper 107 wird im Bereich seines Griffstieles 104 mit dem weichelastischen Thermoplasten umspritzt. Durch Umspritzen der weichelastischen Kunststoffkomponente 126 werden die Borstenbündel 100 mit dem Grundkörper 107 verbunden, wie dies vorstehend bereits unter Bezugnahme auf die Figur 7 näher erläutert worden ist. Nach einer Nachdruckphase und bei hinreichender Abkühlung der eingespritzten Kunststoffkomponenten werden die Werkzeugplatten 120, 122 voneinander entfernt. Nun wird erneut der Drehteller in Richtung der Pfeile II-1 und II-2 ausgehoben und um 180° gedreht. Die zuvor fertig gestellten Bürsten werden hierbei aufgrund der in der Lochfeldplatte 20 gehaltenen Borstenbündel zusammen mit dem Drehteller 132 bewegt und liegen den Drehteller 132 vorzugsweise oben überragend frei. Eine vorher in die Aufnahme 130 eingesetzte weitere und mit Halteelementen 12 bestückte Lochfeldplatte 20 wurde bei dieser Drehbewegung an der zweiten Spritzgießform positioniert. Zeitgleich zu der vorbeschriebenen Drehbewegung greift eine Handhabe zwischen die Werkzeugplatten 120, 122 und entnimmt die jeweiligen Grundkörper 107 aus den nebeneinander angeordneten Kavitäten der dritten Spritzgießform 54, verbringt diese in Richtung des Pfeils I-1 zu der zweiten Spritzgießform 64 und setzt die Grundkörper 107 an der dem Drehteller 132 gegenüberliegenden Seite des Mehrfachwerkzeuges ein. Die Grundkörper 107 werden dementsprechend bei geöffneten Werkzeugplatten 120, 122 in die düsenseitige Werkzeugplatte 120 eingesetzt, wohingegen die vorbereiteten Lochfeldplatten 20 an der fahrseitigen Werkzeugplatte 122 an der zweiten Spritzgießform 64 positioniert werden.

Nach dieser platzsparenden Anordnung der vorbereiteten spritzgegossenen Bauteile der fertigen Bürste wird das Werkzeug erneut geschlossen und die Einspritzdüsen 124, 126, 128 thermoplastische Masse in die Kavitäten eingespritzt. Zeitgleich werden dabei die an der freien Seite des Drehtellers 132 bereitgehaltenen fertig gestellten Bürsten zusammen mit der Lochfeldplatte 20 entnommen und eine neue mit Halteelementen 12 bestückte Lochfeldplatte 20 in die dort vorgesehene Aufnahme 130 eingesetzt.

### Bezugszeichenliste

- 1: erste Spritzgießform
- 2: düsenseitige erste Werkzeughälfte
- 4: fahrseitige erste Werkzeughälfte
- 6: erstes Formnest
- 8: Halteelementkavitäten
- 10: Durchlass
- 12: Halteelement
- 12a: Bündeldurchlass
- 12b: Ringnut
- 14: Steg
- 16: Stift
- 16a: zylindrischer Kragen
- 18: Gegenstift
- 18a: kegelstumpfförmiger Abschnitt
- 18b: Zylinderabschnitt
- 20: Lochfeldplatte
- 22: Haltekanal
- 24: Halteelementaufnahme
- 50: Spritzgießwerkzeug
- 52: Wendeeinheit
- 54: dritte Spritzgießform
- 56: düsenseitige dritte Werkzeughälfte
- 58: fahrseitige dritte Werkzeughälfte
- 60: Dorn
- 60a: Endabschnitt
- 62: Kern
- 62a: Endabschnitt
- 62b: Kernelement
- 62c: Kernbasis
- 62d: Formabschnitt
- 64: zweite Spritzgießform
- 66: fahrseitige zweite Werkzeughälfte
- 68: düsenseitige zweite Werkzeughälfte
- 70: Mattenkavität
- 100: Borstenbündel
- 102: Verdickung
- 104: Griffstiel
- 106: Bürstenkopf
- 107: Grundkörper
- 108: Ausnehmung
- 110: Kranz
- 112: Matte
- 114: Deckplättchen
- 116: Steg
- 120: Werkzeugplatte
- 122: Werkzeugplatte
- 124: Einspritzdüse für die Hartkomponente
- 126: Einspritzdüse für die weichelastische Kunststoffkomponente
- 128: Einspritzdüse für den weichelastischen Thermoplasten
- 130: Aufnahme
- 123: Drehteller

- T: Werkzeugtrennebene
- A: 1. Station
- B: 2. Station

## Patentansprüche

1. Verfahren zum Herstellen einer Bürste mit einem Bürstenkopf (106) der Borstenbündel (100) trägt, die durch in wenigstens einer weichelastischen Matte (112) eingebettete und das befestigungsseitige Ende der Borstenbündel (100) zumindest teilweise umgebende Halteelemente (12) gehalten sind;
bei dem eine Vielzahl von Halteelementen (12) in einer ersten Spritzgießform (1) ausgebildet und in eine Werkzeughälfte (66) einer zweiten Spritzgießform (64) eingesetzt werden;
die zweite Spritzgießform (64) unter Einschluss eines in die zweite Spritzgießform (64) eingelegten vorgefertigten Bürstengrundkörpers (107) geschlossen wird;
durch Einspritzen einer weichelastischen Kunststoffkomponente die Halteelemente (12) unverlierbar mit dem Bürstengrundkörper (107) verbunden werden; und
die so geformte Bürste aus der zweiten Spritzgießform entnommen wird.

2. Verfahren nach Anspruch 1, **dadurch gekennzeichnet, dass** nach dem Ausbilden der Halteelemente (12) in diese Borstenbündel (100) eingebracht werden und danach zusammen mit den Halteelementen (12) in die zweite Werkzeughälfte (66) eingesetzt werden.

3. Verfahren nach Anspruch 1 oder 2, **dadurch gekennzeichnet, dass** die Halteelemente (12) an einer die Werkzeughälfte (66) der zweiten Spritzgießform (64) komplettierenden Halteplatte (20) angeordnet werden und dass die Halteplatte (20) in die zweite Spritzgießform (64) eingesetzt wird.

4. Verfahren nach einem der Ansprüche 1 bis 3, **dadurch gekennzeichnet, dass** die Borstenbündel (100) in der zweiten Spritzgießform (64) durch Einschluss der befestigungsseitigen Enden der Borstenbündel (100) zwischen dem Halteelement (12) und der weichelastischen Kunststoffkomponente mit dem Bürstengrundkörper (107) verbunden werden.

5. Verfahren nach einem der vorherigen Ansprüche, **dadurch gekennzeichnet, dass** die Borstenbündel (100) nach dem Einbringen in die Halteelemente (12) durch Anschmelzen der befestigungsseitigen Enden der Borstenbündel (100) gegen Ausziehen der befestigungsseitigen Enden aus dem Halteelement gesichert werden.

6. Verfahren nach einem der vorherigen Ansprüche, **dadurch gekennzeichnet, dass** die Halteelemente (12) in der ersten Spritzgießform (1) in einer der Anordnung an der Bürste entsprechenden Anordnung ausgeformt und in dieser Anordnung in die Lochfeldplatte (20) überführt werden.

7. Verfahren nach einem der vorherigen Ansprüche, **dadurch gekennzeichnet, dass** die Halteelemente (12) in der ersten Spritzgießform (1) als Einheit ausgebildet werden und die einzelnen Halteelemente (12) miteinander verbindenden Verbindungsstege abgetrennt werden.

8. Verfahren nach Anspruch 7, **dadurch gekennzeichnet, dass** die Verbindungsstege in der ersten Spritzgießform abgetrennt werden.

9. Verfahren nach einem der vorherigen Ansprüche, **dadurch gekennzeichnet, dass** die vereinzelten Halteelemente (12) durch in einzelne Halteelemente (12) eingreifende Dorne (16) gehalten in der der Anordnung in der Bürste entsprechenden Anordnung an die Lochfeldplatte (20) überführt werden.

10. Verfahren nach einem der vorherigen Ansprüche, **dadurch gekennzeichnet, dass** die Halteelemente (12) durch Einbringen in an der Lochfeldplatte (20) ausgesparte Halteelementaufnahmen (24) an der Lochfeldplatte (20) in der vorbestimmten Anordnung fixiert werden.

11. Verfahren nach einem der vorherigen Ansprüche, **dadurch gekennzeichnet, dass** der Bürstengrundkörper (107) in einer dritten Spritzgießform (54) ausgebildet wird und zeitgleich mit den Halteelementen (12) in der Kavität der zweiten Spritzgießform (64) angeordnet wird.

12. Verfahren nach Anspruch 11, **dadurch gekennzeichnet, dass** der Bürstengrundkörper (107) an einer Werkzeughälfte (68) der zweiten Spritzgießform (64) und die Halteelemente (12) an der anderen Werkzeughälfte (66) der zweiten Spritzgießform (64) angeordnet werden.

13. Verfahren nach Anspruch 11 oder 12, **dadurch gekennzeichnet, dass** die Halteelemente (12) durch Drehung eines die Lochfeldplatte (20) haltenden Drehtellers (132) einer Werkzeughälfte (66) der zweiten Spritzgießform (64) und der Bürstengrundkörper (107) als separates Teil in die Kavität der anderen Werkzeughälfte (68) eingesetzt wird.

14. Verfahren nach einem der vorherigen Ansprüche, **dadurch gekennzeichnet, dass** der Bürstengrundkörper (107) in der zweiten Spritzgießstation (64) umspritzt wird.

15. Verfahren nach Anspruch 14, **dadurch gekennzeichnet, dass** der Bürstengrundkörper (107) in der zweiten Spritzgießform (64) mit einem weiteren weichelastischen Thermoplasten umspritzt wird.

16. Vorrichtung zur Herstellung einer Bürste mit einem Bürstenkopf (106), der Borstenbündel (100) trägt, die durch in wenigstens einer weichelastischen Matte (112) eingebettete und das befestigungsseitige Ende der Borstenbündel (100) zumindest teilweise umgebende Halteelemente (12) gehalten sind, mit:
einer ersten Spritzgießform (1), welche eine Vielzahl von jeweils die Halteelemente (12) abbildenden und miteinander verbundenen Halteelementkavitäten (8) aufweist, die in einer der Lage der Borstenbündel (100) an dem Bürstenkopf (106) entsprechenden Anordnung zueinander vorgesehen sind und die stirnseitig von wenigstens einem quer zur Werkzeugtrennebene (T) beweglichen Stift (16) abgeschlossen sind; und
einer zweiten Spritzgießform (64) zum Abformen der weichelastischen Matte (112), deren eine Werkzeughälfte (66) die Borstenbündel (100) aufnehmende Haltekanäle (22) aufweist, die in einer der Lage der Borstenbündel (100) an dem Bürstenkopf (106) entsprechende Anordnung zueinander vorgesehen sind und denen Haltemittel (24) zum Halten je eines der Halteelemente (12) im Bereich einer Mündung des Haltekanals (22) zugerordnet sind, und die zusammen mit einer anderen Werkzeughälfte (68) der zweiten Spritzgießform (64) einen Hohlraum ausbildet, der derart bemessen ist, dass ein vorgefertigter Bürstenkopf (106), der wenigstens eine die Umfangsfläche einer Mattenkavität (70) zum Abformen der Matte (112) vorgebende Ausnehmung (108) aufweist, in der geschlossenen zweiten Spritzgießform (64) aufnehmbar ist.

17. Vorrichtung nach Anspruch 16, **dadurch gekennzeichnet, dass** die Haltemittel durch im Bereich der Mündung der Haltekanäle (22) ausgesparte Halteelementaufnahmen (24) gebildet sind.

18. Vorrichtung nach Anspruch 16 oder 17, **dadurch gekennzeichnet, dass** Halteelementaufnahmen (24) derart bemessen sind, dass diese lediglich ein Teilstück, vorzugsweise ein Teilstück von weniger als 1/3 der Länge der Halteelemente (12) aufnehmen.

19. Vorrichtung nach Anspruch 16 bis 18, **dadurch gekennzeichnet, dass** die Haltekanäle (22) in einer die eine Werkzeughälfte (66) komplettierenden und die Mattenkavität (70) begrenzenden Lochfeldplatte (20) ausgespart sind.

20. Vorrichtung nach Anspruch 16 bis 18, **gekennzeichnet durch** eine dritte Spritzgießform (54) zum Abformen eines den Bürstenkopf (106) aufweisenden Bürstengrundkörpers (107), dessen eine Werkzeughälfte (56) **durch** die andere Werkzeughälfte (68) der zweiten Spritzgießform (64) gebildet ist.

21. Vorrichtung nach Anspruch 20, **dadurch gekennzeichnet, dass** eine andere Werkzeughälfte (58) der dritten Spritzgießform (54) einen die Umfangsfläche der Ausnehmung (108) des Bürstenkopfes (106) vorgebenden, in das Formnest hineinragenden Dorn (60) aufweist und dass die eine Werkzeughälfte (56) der dritten Spritzgießform (54) einen stirnseitig an den Dorn (60) anlegbaren und einen endseitig der Ausnehmung (108) ausgebildeten Kranz (110) vorgebenden Kern (62) hat.

22. Vorrichtung nach Anspruch 21, **dadurch gekennzeichnet, dass** der Dorn (60) als Faltkern mit einem beweglichen, an der Innenumfangsfläche der Ausnehmung (108) des Bürstenkopfes (106) eine Nut aussparenden Formabschnitt (60b) ausgebildet sind.

23. Vorrichtung nach einem der Ansprüche 16 bis 22, **gekennzeichnet durch** eine Umlaufstrecke für eine Vielzahl von Lochfeldplatten mit
einer Halteelementübergabestation, an welcher eine der Lochfeldplatten (20) mit ihren Haltekanälen (22) fluchtend zu den zugeordneten Halteelementkavitäten (8) gehalten ist;
einer Beborstungsstation, an der die Borstenbündel (100) in die Haltekanäle (22) und die zugeordneten Halteelemente (12) eingeführt werden und
einer Transferstation, an der die Lochfeldplatte (20) an die eine Werkzeughälfte (66) der zweiten Spritzgießform (64) übergeben wird.

24. Vorrichtung nach Anspruch 23, **dadurch gekennzeichnet, dass** zwischen der Beborstungsstation und der Transferstation eine Anschmelzstation angeordnet ist, an der die Borstenbündel (100) an ihren befestigungsseitigen Enden zur Ausbildung einer Verdickung (102) angeschmolzen werden, die größer als ein in dem zugeordneten Halteelement (12) ausgebildeter Bündeldurchlass (12a) ist.

25. Vorrichtung nach Anspruch 24, **dadurch gekennzeichnet, dass** der Anschmelzstation wenigstens eine weitere Vorbereitungsstation für die Borstenbündel (100) vorgeschaltet ist.

26. Vorrichtung nach einem der Ansprüche 23 bis 25, **dadurch gekennzeichnet, dass** die Beborstungsstation eine Übergabeplatte aufweist, welche die Borstenbündel (100) haltende Übergabekanäle umfasst, die in der den Haltekanälen (22) entsprechenden Anordnung fluchtend zu diesen vorgesehen sind und der eine Schiebeinrichtung zum zeitgleichen Übergeben sämtlicher Borstenbündel von den Übergabekanälen an die Haltekanäle (22) zugeordnet ist.

27. Vorrichtung nach einem der Ansprüche 16 bis 26, **gekennzeichnet durch** eine Trenneinrichtung (2, 4, 16, 18) mit welcher die Halteelemente (12) vor der Übergabe an die Lochfeldplatte (20) voneinander trennbar sind.

28. Vorrichtung nach Anspruch 27, **dadurch gekennzeichnet, dass** die Trenneinrichtung **dadurch** gebildet ist, dass dem Stift (16) ein an der gegenüberliegenden Stirnseite des Halteelementes (12) angeordneter Gegenstift (18) zugeordnet ist, wobei der Stift (16) und der Gegenstift (18) unter Zwischenlage eines Halteelementes (12) quer zur Werkzeugtrennebene (T) beweglich sind und eine der äußeren Querschnittsfläche des Halteelementes (12) entsprechende Querschnittsfläche aufweisen.

29. Vorrichtung nach einem der Ansprüche 16 bis 28, **dadurch gekennzeichnet, dass** die Mattenkavität mit einem Plastifizieraggregat für thermoplastisches Elastomer kommuniziert.

30. Vorrichtung nach einem der Ansprüche 16 bis 29, **dadurch gekennzeichnet, dass** die Halteelementkavitäten mit einem Plastifizieraggregat für eine Hartkomponente, insbesondere Polypropylen kommunizieren.

31. Vorrichtung nach einem der Ansprüche 16 bis 30, **gekennzeichnet durch** eine Verbindungsstation, in der ein die Ausnehmung (108) des Bürstenkopfes (106) abdeckendes Deckplättchen (104) mit dem Bürstenkopf (106) verbunden wird.

32. Vorrichtung nach einem der Ansprüche 16 bis 31, **dadurch gekennzeichnet, dass** die zweite Spritzgießform (64) als dritte Station (III) eines Mehrfachwerkzeuges ausgebildet ist, an dessen erster Station (I) die dritte Spritzgießform (54) vorgesehen ist und an deren zweiter Station (II) eine Umspritzungskavität zum Umspritzen eines Bürstengrundkörpers (104, 106) mit einem weichelastischen Thermoplasten vorgesehen ist.

33. Vorrichtung nach einem der Ansprüche 16 bis 32, **dadurch gekennzeichnet, dass** die zweite Spritzgießform (64) als zweite Station (B) eines Mehrfachwerkzeuges ausgebildet ist, an dessen erster Station (A) die dritte Spritzgießform (54) vorgesehen ist und die einen in einer Hälfte des Mehrfachwerkzeuges angeordneten Drehteller (132) umfasst, der an gegenüberliegenden Seiten Aufnahmen (130) für die Lochfeldplatte (20) aufweist und
dass die Aufnahme (130) derart angeordnet ist, dass einer der Aufnahmen (130) bei geschlossenem Mehrfachwerkzeug an dessen Außenseite zugänglich ist, während die in der anderen Aufnahme (130) aufgenommene Lochfeldplatte (20) die Kavität der zweiten Spritzgießform (64) komplettiert.

34. Vorrichtung nach Anspruch 33, **gekennzeichnet durch** eine Handhabe, die von der ersten Station (A) zu der zweiten Station (B) hin- und her beweglich und derart vorbereitet ist, dass der Bürstengrundkörper (107) von der an der zweiten Station (B) in die andere Hälfte (64) des Mehrfachwerkzeuges eingebracht werden kann.

## Claims

1. Method for producing a brush with a brush head (106) carrying bristle-bundles (100) which are held by holder elements (12) embedded in at least one flexible mat (112) and at least partly surrounding the attachment ends of the bristle-bundles (100);
wherein a plurality of holder elements (12) are formed in a first injection mould (1) and inserted into a half-die (66) of a second injection mould (64);
the second injection mould (64) is closed, surrounding a prefabricated brush body (107) placed in the second injection mould (64);
the holder elements (12) are captively joined to the brush body (107) by injection of a flexible plastic component; and
the brush thus formed is removed from the second injection mould.

2. Method according to Claim 1, **characterized in that** after the holder elements (12) are formed, bristle-bundles (100) are inserted into them, and then inserted together with the holder elements (12) into the second half-die (66).

3. Method according to Claim 1 or Claim 2, **characterized in that** the holder elements (12) are **arranged on a holder plate (20) completing the half-die (66) of the second injection mould (64),** and **in that** the holder plate (20) is inserted into the second injection mould (64).

4. Method according to any one of Claims 1 to 3, **characterized in that** the bristle-bundles (100) are joined to the brush body (107) in the second injection mould (64) by trapping the attachment ends of the bristle-bundles (100) between the holder element (12) and the flexible plastic component.

5. Method according to any one of the preceding claims, **characterized in that** after insertion into the holder elements (12) the bristle-bundles (100) are secured against pulling-out of their attachment ends from the holder element by fusion of the said attachment ends.

6. Method according to any one of the preceding claims, **characterized in that** the holder elements (12) are formed in the first injection mould (1) in an arrangement corresponding to the arrangement on the brush, and are transferred to the hole-pattern plate (20) **in that** arrangement.

7. Method according to any one of the preceding claims, **characterized in that** the holder elements (12) are formed in the first injection mould (1) as one unit, and webs connecting individual holder elements (12) to each other are parted off.

8. Method according to Claim 7, **characterized in that** the connecting webs are parted off in the first injection mould.

9. Method according to any one of the preceding claims, **characterized in that** the separated holder elements (12), held by pins (16) engaging in individual holder elements (12), are transferred to the hole-paftem plate (20) in the arrangement corresponding to the arrangement in the brush.

10. Method according to any one of the preceding claims, **characterized in that** the holder elements (12) are fixed to the hole-pattern plate (20) in the predetermined arrangement by being inserted into holder-element seats (24) let into the hole-pattern plate (20).

11. Method according to any one of the the preceding claims, **characterized in that** the brush body (107) is formed in a third injection mould (54) and is placed in the cavity of the second injection mould (64) simultaneously with the holder elements (12).

12. Method according to Claim 11, **characterized in that** the brush body (107) is arranged on one half-die (68) of the second injection mould (64) and the holder elements (12) are arranged on the other half-die (66) of the second injection mould (64).

13. Method according to Claim 11 or Claim 12, **characterized in that** the holder elements (12) are inserted by rotating a turntable (132) of one half-die (66) of the second injection mould (64) holding the hole-pattern plate (20), and the brush body (107) is inserted into the cavity of the other half-die (68) as a separate part.

14. Method according to any one of the preceding claims, **characterized in that** moulding material is injected around the brush body (107) in the second injection-moulding station (64).

15. Method according to Claim 14, **characterized in that** an additional flexible thermoplastic material is injected around the brush body (107) in the second injection mould (64).

16. Apparatus for producing a brush with a brush head (106) carrying bristle-bundles (100) which are held by holder elements (12) embedded in at least one flexible mat (112) and at least partly surrounding the attachment ends of the bristle-bundles (100), with:
a first injection mould (1) which has a plurality of interconnected holder-element cavities (8) to form the individual holder elements, provided in a mutual arrangement corresponding to the positions of the bristle-bundles (100) on the brush head (106) and closed off at their ends by at least one pin (16) movable at right angles to the die parting plane (T); and
a second injection mould (64) for moulding the flexible mat (112), one half-die (66) of which has holding passages (22) for the bristle-bundles (100) provided in a mutual arrangement corresponding to the positions of the bristle-bundles (100) on the brush head (106) and
associated with holding means (24) each for holding one of the holder elements (12) in the region of its communication with the holding passage (22), and together with another half-die (68) of the second injection mould (64) forms a cavity designed so that a prefabricated brush head (106) which has at least one recess (108) defining the circumferential face of a mat cavity (70) for moulding the mat (112) can be contained in the closed second injection mould (64).

17. Apparatus according to Claim 16, **characterized in that** the holding means are formed by holder-element seats (24) recessed in the region of communication with the holding passages (22).

18. Apparatus according to Claim 16 or Claim 17, **characterized in that** [the] holder-element seats (24) are designed to hold only a fraction, preferably a fraction of less than 1/3, of the length of the holder elements (12).

19. Apparatus according to Claims 16 to 18, **characterized in that** the holding passages (22) are made in a hole-pattern plate (20) completing the one half-die (66) and bounding the mat cavity (70).

20. Apparatus according to Claims 16 to 18, **characterized by a** third injection mould (54) for moulding a brush body (107) with the brush head (106), one half-die (56) of which consists of the other half-die (68) of the second injection mould (64).

21. Apparatus according to Claim 20, **characterized in that** another half-die (58) of the third injection mould (54) has a plug (60) jutting into the moulding cavity and defining the circumferential face of the recess (108) of the brush head (106), and **in that** the one half-die (56) of the third injection mould (54) has a core (62) abuttable face-to-face against the plug (60) and defining the ring (110) formed at the end of the recess (108).

22. Apparatus according to Claim 21, **characterized in that** the plug (60) is configured as a collapsible core with a movable mould portion (60b) reserving a groove on the inner circumferential face of the recess (108) in the brush head (106).

23. Apparatus according to any one of Claims 16 to 22, **characterized by** a circulation path for a plurality of hole-pattern plates with
a holder-element transfer station at which one of the hole-pattern plates (20) is held with its holding passages (22) aligned with the associated holder-element cavities (8);
a bristle insertion station at which the bristle-bundles (100) are inserted into the holding passages (22) and the associated holder elements (12); and
a transfer station at which the hole-pattern plate (20) is transferred to the one half-die (66) of the second injection mould (64).

24. Apparatus according to Claim 23, **characterized in that** a fusing station, at which the bristle-bundles (100) are fused to form a thickening (102) at their attachment ends that is larger than a bundle lead-through (12a) formed in the associated holder element (12), is arranged between the bristle insertion station and the transfer station.

25. Apparatus according to Claim 24, **characterized in that** the fusion station precedes at least one further preparation station for the bristle-bundles (100).

26. Apparatus according to any one of Claims 23 to 25, **characterized in that** the bristle insertion station has a transfer plate which has transfer passages holding the bristle-bundles (100) provided in the same arrangement as the holding passages (22) and aligned with these, and which cooperates with a pusher device for simultaneous transfer of all bristle-bundles from the transfer passages to the holding passages (22).

27. Apparatus according to any one of Claims 16 to 26, **characterized by** a parting device (2, 4, 16, 18) for parting the holder elements (12) from each other prior to transfer to the hole-pattern plate (20).

28. Apparatus according to Claim 27, **characterized in that** the parting device is formed by assigning to the pin (16) a counter-pin (18) arranged on the opposite side of the holder element (12) so that the pin (16) and counter-pin (18) are movable at right angles to the die parting plane (T) with a holder element (12) interposed between them and have cross-sectional areas corresponding to the outer cross-sectional area of the holder element (12).

29. Apparatus according to any one of Claims 16 to 28, **characterized in that** the mat cavity communicates with a plasticizer unit for thermoplastic elastomer.

30. Apparatus according to any one of Claims 16 to 29, **characterized in that** the holder-element cavities communicate with a plasticizer unit for a hard component, in particular polypropylene.

31. Apparatus according to any one of Claims 16 to 30, **characterized by** an attachment station in which a small plate (104) is attached to the brush head (106) to cover the recess (108) in the brush head (106).

32. Apparatus according to any one of Claims 16 to 31, **characterized in that** the second injection mould (64) is designed as the third station (III) of a multi-cavity die at whose first station (I) the third injection mould (54) is provided and at whose second station (II) an injection-moulding cavity for injection moulding a flexible thermoplastic material around a brush body (104, 106) is provided.

33. Apparatus according to any one of Claims 16 to 32, **characterized in that** the second injection mould (64) is designed as the second station (B) of a multi-cavity die at whose first station (A) the third injection mould (54) is provided and which comprises a turntable (132) arranged in one half of the multi-cavity die that has seats (130) for the hole-pattern plate (20) on opposite sides, and
**in that** the seat (130) is arranged so that one of the seats (130) is accessible from outside the multi-cavity die when the multi-cavity die is closed whilst the note-pattern plate (20) seated in the other seat (130) completes the cavity in the second injection mould (64).

34. Apparatus according to Claim 33, **characterized by** a manipulator that is movable to and fro from the first station (A) to the second station (B) and is prepared so that the brush body (107) can be moved from the at the *[sic]* second station (B) into the other half (64) of the multi-cavity die.

## Revendications

1. Procédé pour fabriquer une brosse comportant une tête (106) qui porte des faisceaux de poils (100) fixés grâce à des éléments de fixation (12) qui sont enrobés dans au moins un mat souple (112) et qui entourent au moins partiellement l'extrémité des faisceaux (100) située côté extrémité ;
selon lequel plusieurs éléments de fixation (12) sont formés dans un premier moule à injection (1) et sont placés dans une moitié (66) d'un deuxième moule à injection (64) ;
le deuxième moule à injection (64) est fermé en enfermant un corps de base de brosse préfabriqué (107) placé dans le deuxième moule (64) ;
grâce à l'injection d'un composant de matière plastique souple, les éléments de fixation (12) sont reliés au corps de base de brosse (107) pour être imperdables ; et
la brosse ainsi formée est enlevée du deuxième moule à injection.

2. Procédé selon la revendication 1, **caractérisé en ce que** les faisceaux de poils (100) sont introduits dans les éléments de fixation (12) après la formation de ceux-ci, et sont ensuite placés avec lesdits éléments de fixation (12) dans la deuxième moitié de moule (66).

3. Procédé selon la revendication 1 ou 2, **caractérisé en ce que** les éléments de fixation (12) sont disposés sur une plaque de fixation (20) qui complète la moitié (66) du deuxième moule à injection (64) et **en ce que** la plaque de fixation (20) est placée dans le deuxième moule à injection (64).

4. Procédé selon l'une des revendications 1 à 3, **caractérisé en ce que** dans le deuxième moule à injection (64), les faisceaux de poils (100) sont reliés au corps de base de brosse (107) grâce au fait que leurs extrémités situées côté fixation sont enfermées entre l'élément de fixation (12) et le composant de matière plastique souple.

5. Procédé selon l'une des revendications précédentes, **caractérisé en ce que** les faisceaux de poils (100), après avoir été placés dans les éléments de fixation (12), sont fixés grâce à la fusion de leurs extrémités situées côté fixation, de manière à empêcher un arrachement desdites extrémités hors de l'élément de fixation.

6. Procédé selon l'une des revendications précédentes, **caractérisé en ce que** les éléments de fixation (12) sont formés dans le premier moule à injection (1) suivant une disposition correspondant à leur disposition sur les brosses, et sont transférés dans la plaque perforée (20) suivant cette disposition.

7. Procédé selon l'une des revendications précédentes, **caractérisé en ce que** les éléments de fixation (12) sont moulés sous la forme d'une unité dans le premier moule à injection (1), et des pattes de liaison qui relient les éléments de fixation (12) individuels sont détachées.

8. Procédé selon la revendication 7, **caractérisé en ce que** les pattes de liaison sont détachées dans le premier moule à injection.

9. Procédé selon l'une des revendications précédentes, **caractérisé en ce que** les éléments de fixation (12), une fois séparés, sont transférés sur la plaque perforée (20) suivant la disposition correspondant à leur disposition dans la brosse, en étant retenus par des mandrins (16) qui pénètrent dans les éléments de fixation individuels (12).

10. Procédé selon l'une des revendications précédentes, **caractérisé en ce que** les éléments de fixation (12) sont fixés dans la disposition prédéfinie en étant placés dans des logements pour éléments de fixation (24) prévus sur la plaque perforée (20).

11. Procédé selon l'une des revendications précédentes, **caractérisé en ce que** le corps de base de brosse (107) est formé dans un troisième moule à injection (54) et est disposé en même temps que les éléments de fixation (12) dans la cavité du deuxième moule à injection (64).

12. Procédé selon la revendication 11, **caractérisé en ce que** le corps de base de brosse (107) est disposé sur une moitié (68) du deuxième moule à injection (64) et les éléments de fixation (12) sont disposés sur l'autre moitié (66) du deuxième moule à injection (64).

13. Procédé selon la revendication 11 ou 12, **caractérisé en ce que** les éléments de fixation (12) sont placés dans la cavité d'une moitié (68) du deuxième moule grâce à la rotation d'un plateau tournant (132) de l'autre moitié de moule (66) qui contient la plaque perforée (20), et le corps de base de brosse (107) est placé dans ladite cavité sous forme d'élément séparé.

14. Procédé selon l'une des revendications précédentes, **caractérisé en ce que** le corps de base de brosse (107) est enrobé par injection dans le deuxième poste de moulage par injection (64).

15. Procédé selon la revendication 14, **caractérisé en ce que** le corps de base de brosse (107) est enrobé dans le deuxième moule à injection (64) avec un autre thermoplastique souple.

16. Dispositif pour fabriquer une brosse comportant une tête (106) qui porte des faisceaux de poils (100) fixés grâce à des éléments de fixation (12) qui sont enrobés dans au moins un mat souple (112) et qui entourent au moins partiellement l'extrémité des faisceaux (100) située côté extrémité, comprenant :
un premier moule à injection (1) présentant plusieurs cavités pour éléments de fixation (8) qui reproduisent et relient les éléments de fixation (12), qui sont prévues suivant une disposition correspondant à la position des faisceaux de poils (100) sur la tête de brosse (106) et qui sont fermées côté frontal par au moins une tige (16) mobile transversalement par rapport au plan de séparation de moule (T) ; et
un deuxième moule à injection (64) pour former le mat souple (112), dont une moitié (66) comporte des conduits de fixation (22) qui reçoivent les faisceaux de poils (100), qui sont prévus suivant une disposition correspondant à la position desdits faisceaux (100) sur la tête de brosse (106), auxquels sont associés des moyens de fixation (24) destinés à contenir chacun un élément de fixation (12) dans la zone d'une ouverture de chaque conduit (22), et qui forment avec une autre moitié (68) du deuxième moule à injection (64) une cavité dimensionnée de manière à pouvoir recevoir dans le deuxième moule à injection (64) fermé une tête de brosse (106) préfabriquée présentant au moins un creux (108) qui prédéfinit la surface périphérique d'une cavité pour mat (70) destinée à former le mat (112).

17. Dispositif selon la revendication 16, **caractérisé en ce que** les moyens de fixation sont formés par des logements pour éléments de fixation (24) formés dans la zone de l'ouverture des conduits de fixation (22).

18. Dispositif selon la revendication 16 ou 17, **caractérisé en ce que** les logements pour éléments de fixation (24) sont dimensionnés de manière à recevoir une partie seulement, de préférence moins de 1/3 de la longueur des éléments de fixation (12).

19. Dispositif selon l'une des revendications 16 à 18, **caractérisé en ce que** les conduits de fixation (22) sont prévus dans une plaque perforée (20) qui complète une moitié de moule (66) et qui délimite la cavité pour mat (70).

20. Dispositif selon l'une des revendications 16 à 18, **caractérisé par** un troisième moule à injection (54) qui est destiné à former un corps de base de brosse (107) comportant la tête de brosse (106), et dont une moitié (56) est formée par la deuxième moitié (68) du deuxième moule à injection (64).

21. Dispositif selon la revendication 20, **caractérisé en ce qu'**une autre moitié (58) du troisième moule à injection (54) comporte un mandrin (60) qui prédéfinit la surface périphérique du creux (108) de la tête de brosse (106) et qui pénètre dans l'empreinte, et **en ce qu'**une moitié (56) du troisième moule à injection (54) a un noyau (62) qui est apte à être appliqué côté frontal contre le mandrin (60) et qui prédéfinit une couronne (100) formée sur le côté extrémité du creux (108).

22. Dispositif selon la revendication 21, **caractérisé en ce que** le mandrin (60) est conçu comme un noyau pliant avec une partie de formage mobile (60b) qui définit une rainure sur la surface périphérique intérieure du creux (108) de la tête de brosse (106).

23. Dispositif selon l'une des revendications 16 à 22, **caractérisé par** une trajectoire circulaire pour plusieurs plaques perforées, avec
un poste de transfert d'éléments de fixation au niveau duquel l'une des plaques perforées (20) est maintenue avec ses conduits de fixation (22) dans l'alignement des cavités pour éléments de fixation (8) associées ;
un poste de pose de poils au niveau duquel les faisceaux de poils (100) sont introduits dans les conduits de fixation (22) et dans les éléments de fixation (12) associés, et
un poste de transfert au niveau duquel la plaque perforée (20) est transférée sur une moitié (66) du deuxième moule à injection (64).

24. Dispositif selon la revendication 23, **caractérisé en ce qu'**il est prévu entre le poste de pose de poils et le poste de transfert un poste de fusion au niveau duquel les faisceaux de poils (100) fondent, à leurs extrémités situées côté fixation, pour former une partie épaissie (102) qui est plus grande qu'un passage pour faisceau (12a) formé dans l'élément de fixation (12) associé.

25. Dispositif selon la revendication 24, **caractérisé en ce qu'**il est prévu en amont du poste de fusion au moins un autre poste de préparation pour les faisceaux de poils (100).

26. Dispositif selon l'une des revendications 23 à 25, **caractérisé en ce que** le poste de pose de poils comporte une plaque de transfert qui comporte des conduits de transfert contenant les faisceaux de poils (100) prévus suivant la disposition correspondant aux conduits de fixation (22), dans l'alignement de ceux-ci, et à laquelle est associé un dispositif coulissant destiné à transférer simultanément tous les faisceaux de poils des conduits de transfert vers les conduits de fixation (22).

27. Dispositif selon l'une des revendications 16 à 26, **caractérisé par** un dispositif de séparation (2, 4, 16, 18) grâce auquel les éléments de fixation (12) peuvent être séparés les uns des autres avant leur transfert sur la plaque perforée (20).

28. Dispositif selon la revendication 27, **caractérisé en ce que** le dispositif de séparation est formé grâce au fait qu'il est prévu, associée à la tige (16), une tige opposée (18) qui est disposée sur le côté frontal opposé de l'élément de fixation (12), la tige (16) et la tige opposée (18) étant mobiles transversalement par rapport au plan de séparation de moule (T), avec un élément de fixation (12) disposé entre elles, et présentant une surface de section transversale correspondant à la surface de section transversale extérieure de l'élément de fixation (12).

29. Dispositif selon l'une des revendications 16 à 28, **caractérisé en ce que** la cavité pour mat communique avec une unité de plastification pour élastomère thermoplastique.

30. Dispositif selon l'une des revendications 16 à 29, **caractérisé en ce que** les cavités pour éléments de fixation communiquent avec une unité de plastification pour un composant dur, en particulier du polypropylène.

31. Dispositif selon l'une des revendications 16 à 30, **caractérisé par** un poste de liaison dans lequel une plaquette de recouvrement (104) qui couvre le creux (108) de la tête de brosse (106) est reliée à la tête de brosse (106).

32. Dispositif selon l'une des revendications 16 à 31, **caractérisé en ce que** le deuxième moule à injection (64) est conçu comme un troisième poste (III) d'un moule à plusieurs cavités dans le premier poste (I) duquel est prévu le troisième moule à injection (54) et dans le deuxième poste (II) duquel est prévue une cavité d'enrobage par injection pour enrober un corps de base de brosse (104, 106) par injection d'un thermoplastique souple.

33. Dispositif selon l'une des revendications 16 à 32, **caractérisé en ce que** le deuxième moule à injection (64) est conçu comme le second poste (B) d'un moule à plusieurs cavités dans le premier poste (A) duquel est prévu le troisième moule à injection (54) et qui comprend dans une moitié un plateau tournant (132) présentant sur des côtés opposés des logements (130) pour la plaque perforée (20),
et **en ce que** les logements (130) sont disposés de telle sorte que l'un d'eux soit accessible sur le côté extérieur du moule à plusieurs cavités, quand celui-ci est fermé, tandis que la plaque perforée (20) logée dans l'autre logement (130) complète la cavité du deuxième moule à injection (64).

34. Dispositif selon la revendication 33, **caractérisé par** une manette qui est mobile suivant un mouvement de va-et-vient entre le premier poste (A) et le second poste (B) et qui est conçue pour que le corps de base de brosse (107) puisse être amené dans la deuxième moitié (64) du moule à plusieurs cavités au niveau du second poste (B).
